(19) Europäisches Patentamt
European Patent Office
Office européen des brevets

(11) EP 4 327 999 B1

(12) **EUROPEAN PATENT SPECIFICATION**

(45) Date of publication and mention of the grant of the patent:
**06.08.2025 Bulletin 2025/32**

(21) Application number: **23177720.2**

(22) Date of filing: **06.06.2023**

(51) International Patent Classification (IPC):
***B29B 7/72*** *(2006.01)* ***B29B 7/88*** *(2006.01)*
***G05B 17/00*** *(2006.01)* ***B29B 17/00*** *(2006.01)*

(52) Cooperative Patent Classification (CPC):
**B29B 17/0026; B29B 7/286; B29B 7/726; B29B 7/88; G06N 20/00;** B29B 7/244; B29B 7/603; B29B 2017/0279; Y02W 30/62

(54) **PLASTIC RECYCLING SUPPORTING APPARATUS AND PLASTIC RECYCLING SUPPORTING METHOD**

KUNSTSTOFFRECYCLINGUNTERSTÜTZUNGSVORRICHTUNG UND KUNSTSTOFFRECYCLINGUNTERSTÜTZUNGSVERFAHREN

APPAREIL ET PROCÉDÉ DE SUPPORT DE RECYCLAGE DE PLASTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.08.2022 JP 2022132386**

(43) Date of publication of application:
**28.02.2024 Bulletin 2024/09**

(73) Proprietor: **Hitachi, Ltd.**
**Tokyo 100-8280 (JP)**

(72) Inventors:
- **KURATA, Sayaka**
  **Tokyo, 100-8280 (JP)**
- **SUZUKI, Hiroyuki**
  **Tokyo, 100-8280 (JP)**
- **MORI, Shunsuke**
  **Tokyo, 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 3 988 270** **EP-A2- 0 634 260**
**EP-B1- 2 054 781** **US-A1- 2006 001 187**
**US-A1- 2022 019 842**

- **LOPEZ-GARCIA PEDRO ET AL: "Compounding process optimization for recycled materials using machine learning algorithms", PROCEDIA CIRP, vol. 105, 1 January 2022 (2022-01-01), NL, pages 237 - 242, XP093111372, ISSN: 2212-8271, DOI: 10.1016/j.procir.2022.02.039**
- **LOPEZ-GARCIA PEDRO ET AL: "Compounding process optimization for recycled materials using machine learning algorithms", PROCEDIA CIRP, vol. 105, 1 January 2022 (2022-01-01), NL, pages 237 - 242, XP093111378, ISSN: 2212-8271, DOI: 10.1016/j.procir.2022.02.039**
- **LA MANTIA FRANCESCO PAOLO ET AL: "An Additive Model to Predict the Rheological and Mechanical Properties of Polypropylene Blends Made by Virgin and Reprocessed Components", RECYCLING, vol. 6, no. 1, 2 January 2021 (2021-01-02), pages 2, XP055962112, DOI: 10.3390/recycling6010002**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 327 999 B1

## Description

### Technical Field

The present invention relates to a plastic recycling supporting apparatus and a plastic recycling supporting method.

### Background Art

From the viewpoint of effective use of resources and reduction of $CO_2$ emission, improvement in a recycling rate of plastic is required.

Patent Literature 1 discloses that, in order to widen an object of a recovery material used in production of a recovery thermoplastic resin, a blending composition of an additional material to be added to the recovery material is calculated based on an index indicating a state of the recovery material and a target value of resin design. For the calculation, a relational expression prepared in advance Further, the publication "Compounding process is used. optimization for recycled materials using machine learning algorithms" with the ISSN 2212-8271 discloses on pages 237 to 242 a plastic recycling supporting apparatus which determines treatment and mixing parameters for recycled materials based on user input of a matrix type and recycling route using an AI-model.

### Citation List

#### Patent Literature

JP2002-308998A

### Summary of Invention

#### Technical Problem

In general, a physical property of the plastic can be controlled by adding an additive. However, in the case of recycled plastic, since it is unknown what physical property a waste plastic has as a base material, it is difficult to know optimal blending of the additive for obtaining a recycled plastic having a desired physical property. Furthermore, since the waste plastic often deteriorates due to oxidation, thermal history, or the like, it is necessary to grasp a deterioration degree of the waste plastic and optimize the blending of the additive according to the deterioration, but the method is unclear.

An object of the invention is to make it possible to determine, based on data, whether a waste plastic can be recycled into a recycled plastic having a desired physical property even if use history of the waste plastic is unknown. Even if the use history of the waste plastic is unknown, blending the additive for recycling into raw plastic having the desired physical property can be estimated with high accuracy.

#### Solution to Problem

A plastic recycling supporting apparatus according to an embodiment of the invention is a plastic recycling supporting apparatus for supporting plastic recycling in which a plastic is blended with an additive and is recycled into a recycled plastic having a desired physical property, the plastic recycling supporting apparatus including: a physical property and deterioration estimator configured to estimate, using a physical property and deterioration estimation model, a physical property and a deterioration degree of the plastic based on a texture structural feature extracted from surface analysis data of the plastic; and a blending estimator configured to estimate a physical property of the recycled plastic based on the physical property and the deterioration degree of the plastic and a blending condition of the additive using a physical property recovery model. The physical property and deterioration estimator estimates a physical property and a deterioration degree of a sample based on a texture structural feature extracted from surface analysis data of the sample, and the blending estimator inversely estimates the blending condition of the additive to be blended in the sample based on the physical property and the deterioration degree of the sample, that are estimated by the physical property and deterioration estimator, and the desired physical property of the recycled plastic.

#### Advantageous Effects of Invention

A plastic recycling process with high reliability is realized. Widening a range of available waste plastics leads to improvement in the recycling rate. Other problems and novel characteristics will be apparent from the description of the present specification and the accompanying drawings.

Brief Description of Drawings

[FIG. 1A] FIG. 1A is a diagram showing a scheme of plastic recycling supporting.
[FIG. 1B] FIG. 1B shows examples of a surface analysis method for extracting a texture structural feature, a physical property, a deterioration degree, and an additive.
[FIG. 2] FIG. 2 shows an example of an XRD spectrum.
[FIG. 3] FIG. 3 is a diagram showing a plastic recycling supporting system.
[FIG. 4] FIG. 4 shows a configuration example of an information processing apparatus.
[FIG. 5] FIG. 5 is a flowchart showing the entire plastic recycling supporting processing.
[FIG. 6] FIG. 6 is a flowchart of determining an acceptance determination criterion.
[FIG. 7] FIG. 7 is a flowchart showing details of a candidate model construction step.
[FIG. 8] FIG. 8 shows a display screen example that presents candidate models for a physical property and deterioration estimation model.
[FIG. 9A] FIG. 9A is a flowchart showing details of a acceptance determination step.
[FIG. 9B] FIG. 9B is a diagram schematically showing a texture structural feature space of a model.
[FIG. 10A] FIG. 10A is a flowchart showing details of an acceptance determination step.
[FIG. 10B] FIG. 10B is a diagram schematically showing the texture structural feature space of the model.
[FIG. 11] FIG. 11 shows an example of an input screen.

Description of Embodiments

Hereinafter, an embodiment of the invention will be described with reference to the drawings.

A scheme of plastic recycling supporting according to the present embodiment is shown in FIG. 1A. In the plastic recycling supporting according to the present embodiment, a plurality of features (hereinafter, referred to as texture structural features) of a texture structure of a base material are extracted using surface analysis data of waste plastic serving as the base material, and a physical property and a deterioration degree of the base material are estimated based on the extracted texture structural features (first estimation). In the first estimation, a physical property and deterioration estimation model is used. The physical property and deterioration estimation model is a model in which the texture structural features of the base material are used as explanatory variables and the physical property and the deterioration degree of the base material are used as target variables. Hereinafter, an example of using, as the physical property and deterioration estimation model, a model trained using a machine learning method will be described. Subsequently, based on the estimated physical property and the deterioration degree of the base material, a blending condition of an additive to be blended into the waste plastic (the base material) is estimated (second estimation) for obtaining a recycled plastic (compound) having a desired physical property. In the second estimation, a physical property recovery model is used. The physical property recovery model is a model in which the physical property and the deterioration degree of the base material and the blending condition of the additive are used as explanatory variables, and the physical property of the compound is used as a target variable. Hereinafter, an example of using, as the physical property recovery model, a model trained using a machine learning method will be described.

FIG. 1B shows examples of a surface analysis method for extracting the texture structural feature, the physical property, the deterioration degree, and the additive, which are used in the first estimation. The surface analysis method, the physical property, the deterioration degree, and the additive are merely examples, and the invention is not limited thereto. A generalized evaluation and measurement method for deterioration of a plastic is unknown. As an example, an accelerated deterioration test is performed on the plastic, and the deterioration degree is defined based on a condition of the accelerated deterioration test. For example, the deterioration degree can be quantitatively defined such that the deterioration degree of the plastic on which the accelerated deterioration test is performed for a longer time is larger.

Here, an example of extracting the texture structural feature of the base material from the surface analysis data will be described. FIG. 2 is an XRD spectrum obtained by performing X-ray diffraction on the base material. The horizontal axis represents a diffraction angle, and the vertical axis represents a diffracted X-ray intensity. With respect to such the XRD spectrum, for example, a pseudo-fort function shown in Math. 1 is fitted as a fitting function.

[Math. 1]

$$G(\Delta 2\theta_{ik}) = A\left[\eta \frac{2}{\pi H_k}\left(1 + 4\left(\frac{(\Delta 2\theta_{ik} - \Delta 2\theta_0)}{H_k}\right)^2\right)^{-1} + (1-\eta)\frac{2\sqrt{\ln 2}}{\sqrt{\pi}H_k} exp\left(-4\ln 2\left(\frac{(\Delta 2\theta_{ik} - \Delta 2\theta_0)}{H_k}\right)^2\right)\right]$$

By fitting the pseudo-fort function, four texture structural features ($\Delta 2\theta_0$: peak position, A: peak height, $H_k$: peak width, $\eta$: Lorentz component) are obtained for each peak included in the XRD spectrum. A spectrum example shown in FIG. 2 includes 85 peaks, and the four texture structural features are extracted for each peak.

FIG. 3 shows a plastic recycling supporting system. The plastic recycling supporting system includes a plastic recycling supporting apparatus 100 and is communicably connected to a terminal 210 via a network 200. The terminal 210 includes a display device 211 such as a display and an input device 212 such as a keyboard. A user accesses the plastic recycling supporting apparatus 100 through the terminal 210, determines, by using the scheme shown in FIG. 1A, whether a plastic is a waste plastic through which the compound having the desired physical property can be obtained, and determines a blending condition of an additive to be added to the waste plastic (the base material) if the compound having the desired physical property can be obtained. The surface analysis data and the physical property data of the waste plastic are transmitted from the terminal 210 to the plastic recycling supporting apparatus 100. In FIG. 3, a differential scanning calorimeter (DSC) 221, a Fourier transform infrared spectrophotometer (FTIR) 222, and an X-ray diffractometer (XRD) 223 are shown as surface analysis devices, and an impact resistance measuring device 224 and a melt mass flow rate (MFR) measuring device 225 are shown as physical property measuring devices. The devices are merely examples, and the present system is not limited to the devices.

The plastic recycling supporting apparatus 100 is implemented by an information processing apparatus, as shown in FIG. 4, including a processor (CPU) 11, a memory 12, a storage device 13, an input device 14, an output device 15, a communication device 16, and a bus 17 as main components. The processor 11 functions as a functional unit (functional block) that provides a predetermined function, by executing processing according to a program loaded into the memory 12. The storage device 13 stores data and the program used by the functional unit. In the storage device 13, a nonvolatile storage medium such as a hard disk drive (HDD) or a solid-state drive (SSD) is used. The input device 14 is a keyboard, a pointing device, or the like, and the output device 15 is a display or the like. The communication device 16 enables communication with the terminal 210 and other information processing apparatuses via the network 200. The processor 11, the memory 12, the storage device 13, the input device 14, the output device 15, and the communication device 16 are communicably connected to each other by the bus 17.

The plastic recycling supporting apparatus 100 is not necessarily implemented by one information processing apparatus, and may include a plurality of information processing apparatuses. In addition, a part or all of functions of the plastic recycling supporting apparatus 100 may be implemented as an application on a cloud.

Hereinafter, processing of the plastic recycling supporting apparatus 100 will be described with reference to flowcharts and a functional block diagram of the plastic recycling supporting apparatus 100 shown in FIG. 3.

FIG. 5 is a flowchart showing the entire plastic recycling supporting processing. The user inputs a type of the waste plastic to be recycled and a target specification of the recycled plastic (S01). FIG. 11 shows an example of an input screen displayed on the terminal 210. An input screen 500 includes a to-be recycled waste plastic information input unit 501, a target specification input unit 502, and prediction condition input units 503 to 505. Information to be input from the waste plastic information input unit 501 includes the type of the waste plastic that is the base material of the recycled plastic. The plastic includes polypropylene (PP), polyethylene (PE), polystyrene (PS), or blends thereof, and is recycled for each type of base material. In addition, it is desirable to input origin information of the waste plastic. The target specification of the recycled plastic is input from the target specification input unit 502. The target specification includes a physical property parameter name, a target value, and an allowable range. Hereinafter, a physical property parameter defined as the target specification is referred to as a target physical property parameter, and unless otherwise specified, a target value including the allowable range is referred to as a target physical property parameter value.

The number of the physical property parameter serving as the target specification is not limited. Further, conditions for selecting a model to be used in the plastic recycling supporting processing are input in advance from the prediction condition input units, and the model is easily narrowed down by the plastic recycling supporting apparatus 100. Here, an example is shown, in which estimation accuracy 503 of the model, a cost 504 allowable for surface analysis for obtaining input data serving as an explanatory variable of the physical property and deterioration estimation model, and a time 505 are input.

The user obtains a sample of the waste plastic to be recycled (S02), and the plastic recycling supporting apparatus 100 makes acceptance determination on the sample (S03). The sample is the waste plastic of the type input in the input step S01, but the user does not have information on a physical property and a deterioration degree of the sample, and does not know whether the sample can be recycled into plastic (compound) having a desired property. For example, when the physical property of the base material greatly deviates from the target specification of the recycled plastic or the deterioration significantly progresses, the target specification may not be achieved. Thus, in an acceptance determination step (S03), it is determined whether there is a possibility that the sample satisfies the target physical property parameter value input in the input step S01, and when it is determined that the target physical property parameter value can be satisfied, the sample is acceptable. Details of the acceptance determination step (S03) will be described later.

The plastic recycling supporting apparatus 100 performs blending optimization on the acceptable waste plastic (S04). In the blending optimization step (S04), since the physical property and the deterioration degree of the sample are estimated by an estimator 141 of a physical property and deterioration estimator 140, an inverse estimator 152 of a blending estimator 150 uses the physical property recovery model to estimate a blending condition of an additive satisfying the target physical property parameter value.

FIG. 6 is a flowchart for determining an acceptance determination criterion in the acceptance determination step (S03). The flow is mainly executed by a model selector 160. First, the model selector 160 searches a model database 163 based on the type of the waste plastic input in the input step (S01) and the target specification of the recycled plastic (S11). The model database 163 stores a model created by the plastic recycling supporting apparatus 100 in the past. In a case of a model created based on machine learning, the ability to make an appropriate inference depends on training data used for model learning. Therefore, a searcher 161 selects a trained model available for the input contents in the input step (S01) as a candidate model when such a trained model is stored in the model database 163 (S12), and constructs the candidate model when the trained model is not stored (S13). When prediction conditions are input by the user (see FIG. 11), the searcher 161 selects a model satisfying the prediction conditions.

Details of the candidate model construction step (S13) are shown in FIG. 7. Based on the type of plastic and the target physical property parameter value, data stored in a plastic database 170 is referred to (S21). The plastic DB 170 stores, for each type of plastic, the surface analysis data, the physical property data, and deterioration degree data of the plastic. Data on the plastic obtained by performing the accelerated deterioration test on the sample under different conditions is stored, and the deterioration degree data is based on the condition of the accelerated deterioration test. Further, the physical property data of the recycled plastic into which the plastic is recycled by being blended with an additive and the blending condition of the additive at that time are also stored.

The physical property and deterioration estimation model and the physical property recovery model are constructed by using the data stored in the plastic DB 170 as training data (S22, S23). In a case of the physical property and deterioration estimation model, a learning unit 111 of a first model constructor 110 performs a construction by performing supervised learning using, as training data, a combination of the texture structural feature of the base material (the plastic on which the accelerated deterioration test is performed) with the physical property and the deterioration degree of the base material which are stored in the plastic DB 170, for example.

In a case of the physical property recovery model, a learning unit 121 of a second model constructor 120 performs a construction by performing supervised learning using, as training data, a combination of the physical property and the deterioration degree of the base material and the blending condition of the additive which are stored in the plastic DB 170, with the physical property of the compound (the recycled plastic into which the base material is recycled by being blended with the additive under the blending condition) which is stored in the plastic DB 170.

Here, it is desirable to construct a plurality of physical property and deterioration estimation models and a plurality of physical property recovery models. Generally, estimation accuracy of a model may be improved by using various types of explanatory variables, on the other hand, when it is necessary to perform various types of surface analyses, a cost and a time for acquiring analysis data increase. In addition, a degree of contribution to the improvement of the estimation accuracy differs depending on the explanatory variables. Therefore, it is desirable to construct a plurality of models with different surface analysis methods for obtaining the texture structural features and different physical property parameters to be predicted, and to allow the user to select an optimal model by weighing the accuracy of the models with a cost of acquiring data for using the models.

Thus, the estimation accuracy and the data acquisition cost are calculated for each constructed model (S24), and the constructed model is registered in the model database 163 in association with the type of the plastic, the target physical property parameter value, the estimation accuracy, and the data acquisition cost (S25). The estimation accuracy of each model is calculated by an accuracy calculator 112 of the first model constructor 110 and an accuracy calculator 122 of the second model constructor 120. When the prediction conditions are input by the user (see FIG. 11), the first model constructor 110 and the second model constructor 120 construct models that satisfy the prediction conditions.

The description returns to FIG. 6. The model selector 160 presents the estimation accuracy and the data acquisition cost of the selected or constructed candidate model to the terminal 210 (S14). FIG. 8 shows a display screen example 300 that presents candidate models of the physical property and deterioration estimation model.

A model 301 corresponds to each candidate model, and the number of parameters 302, a surface analysis method 303, a time 304, a measurement cost 305, physical property estimation accuracy 306, and deterioration estimation accuracy 307 are displayed for each candidate model. The number of parameters 302 is the number of parameters (in this case, the texture structural feature) serving as input data of the model. The surface analysis method 303 is a surface analysis method necessary for obtaining the parameters (the texture structural feature) serving as the input data. A plurality of types of surface analyses may be required according to the texture structural feature to be input into the model. The time 304 and the measurement cost 305 respectively indicate a time and a cost necessary for acquiring the input data of the model by the method specified in the surface analysis method 303. The physical property estimation accuracy 306 and the deterioration estimation accuracy 307 respectively indicate the estimation accuracy for the physical property of the base material and the estimation accuracy for the deterioration degree of the base material in output data of the model. As the estimation accuracy, for example, a determination coefficient $R^2$ can be used.

The user selects a model to be used based on the information of the model presented on the terminal 210. Accordingly, the surface analysis method for the base material (the waste plastic) and the texture structural feature used for the analysis are determined (S15).

The inverse estimator 152 of the blending estimator 150 estimates, using the selected physical property recovery model, allowable ranges of the physical property and the deterioration degree of the base material based on the target physical property parameter value input in the input step (S01) (S16). Subsequently, an inverse estimator 142 of the physical property and deterioration estimator 140 converts the allowable ranges of the physical property and the deterioration degree of the base material obtained in step S16 into a texture structural feature space using the selected physical property and deterioration estimation model, and stores the texture structural feature space in an allowable range storage device 162 (S17). In the flowchart, it is desirable to obtain not only the allowable ranges of the physical property and the deterioration degree of the base material but also unacceptable ranges of the physical property and the deterioration degree of the base material in step S16, and respectively convert the allowable ranges and the unacceptable ranges into the texture structural feature space in step S17. Thus, as will be described later, based on the texture structural feature of the sample, determinations can be made including a determination as to whether a sample can be appropriately determined to be acceptable with respect to the physical property of the base material by the model or the sample cannot be appropriately determined in the model.

The texture structural feature space indicating the allowable ranges of the physical property and the deterioration degree of the base material obtained in step S17 is the acceptance determination criterion used in the acceptance determination step (S03) (see FIG. 5). That is, in the acceptance determination step (S03), when the analysis data analyzed by the surface analysis method determined in step S15 is included in the texture structural feature space obtained in step S17, it is highly possible that the sample can be recycled so as to satisfy the target specification input in input step S01, and it is determined that the sample is acceptable.

A detailed example of the sample acceptance determination step (S03) is shown in FIG. 9A. First, the user performs surface analysis of the sample by the surface analysis method determined in step S15 (S31). The surface analysis data is input from the terminal 210 to a data input unit 182 of the plastic recycling supporting apparatus 100. A feature extraction unit 181 receives the surface analysis data from the data input unit 182, and extracts the texture structural feature by fitting (S32). Thereafter, the estimator 141 of the physical property and deterioration estimator 140 inputs the texture structural feature that is the input data to the physical property and deterioration estimation model to estimate the physical property and the deterioration degree of the sample (the base material) (S33).

Here, as the physical property and deterioration estimation model, a model in which a first texture structural feature obtained from the analysis data obtained by a first surface analysis method and a second texture structural feature obtained from the analysis data obtained by a second surface analysis method are used as the input data is taken as an example. Actually, a plurality of texture structural features can be extracted from the analysis data obtained by one surface analysis method as exemplified with reference to FIG. 2, and for simplification of description, one texture structural feature is obtained by one surface analysis method. FIG. 9B schematically shows the texture structural feature space of the model.

In this example, the texture structural feature space of the model is defined as a space 400 defined by the first texture structural feature and the second texture structural feature. A region 401 is a region where the model can estimate that the sample is acceptable, a region 402 is a region where the model can estimate that the sample is not acceptable, and the remaining region 403 is a region where the model cannot determine that the sample is acceptable or not acceptable. For example, with respect to a region where the model is not trained using the training data, the reliability of model inference decreases. Such a region with low inference reliability is the region 403. Ranges of these regions are stored in the allowable range storage device 162 of the model selector 160. A comparator 131 of a determiner 130 determines in which region of the texture structural feature space of the model the texture structural feature obtained from the analysis data is (S34, S35).

The comparator 131 determines that the sample is acceptable when the texture structural feature obtained from the analysis data is in the region 401 (S36), determines that the sample is not acceptable when the texture structural feature obtained from the analysis data is in the region 402 (S37), and determines that the estimation cannot be performed by the model when the texture structural feature obtained from the analysis data is in the region 403.

When the comparator 131 determines that the sample cannot be estimated, the user measures a physical property value of the sample and stores the result in the plastic database 170 (S38). When the measured physical property value is within the allowable range of the physical property of the base material obtained in step S16, the comparator 131 determines that the sample is acceptable (S36), and when the measured physical property value and the like are outside the allowable range of the physical property of the base material obtained in step S16, the comparator 131 determines that the sample is not acceptable (S40). By storing the physical property value measured for the sample together with the surface analysis data in the plastic database 170, the physical property value can be utilized in training the subsequent model.

Another detailed example of the sample acceptance determination step (S03) is shown in FIG. 10A. In the example shown in FIG. 9A, the physical property and deterioration estimation model is taken as an example, in which the first texture structural feature obtained from the analysis data obtained by the first surface analysis method and the second texture structural feature obtained from the analysis data obtained by the second surface analysis method are used as the input data. On the other hand, in a flowchart shown in FIG. 10A, the acceptance determination is made first, using a first physical property and deterioration estimation model in which the first texture structural feature obtained from the analysis data obtained by the first surface analysis method is used as the input data, and when the determination cannot be made by the first physical property and deterioration estimation model, the acceptance determination is made using a second physical property and deterioration estimation model in which the first texture structural feature and the second texture structural feature obtained from the analysis data obtained by the second surface analysis method are used as the input data. Accordingly, when the acceptance determination of the sample can be made by the first physical property and deterioration estimation model, the acceptance determination can be made at a lower cost.

First, the user performs the surface analysis of the sample by the first surface analysis method (S51). The surface analysis data is input from the terminal 210 to the data input unit 182 of the plastic recycling supporting apparatus 100. The feature extraction unit 181 receives the surface analysis data from the data input unit 182, and extracts the first texture structural feature by fitting (S52). Thereafter, the estimator 141 of the physical property and deterioration estimator 140 inputs the first texture structural feature that is the input data to the first physical property and deterioration estimation model to estimate the physical property and the deterioration degree of the sample (the base material) (S53).

FIG. 10B schematically shows the texture structural feature space of the first physical property and deterioration estimation model and the second physical property and deterioration estimation model. The texture structural feature space of the second physical property and deterioration estimation model is the same as the texture structural feature space shown in FIG. 9B. Meanwhile, the texture structural feature space of the first physical property and deterioration estimation model becomes a one-dimensional space and is divided into regions 411 to 414. The region 411 is a region where the first physical property and deterioration estimation model can determine that the sample is acceptable, the region 412 is a region where the first physical property and deterioration estimation model can determine that the sample is not acceptable, and the regions 413, 414 are regions where the acceptance determination cannot be made by the first physical property and deterioration estimation model. Since the region 413 is a region where the acceptance determination changes depending on the second texture structural feature, the reliability of the inference result of the first physical property and deterioration estimation model is low. Since the region 414 is a region where the model is not trained using the training data, the reliability of the inference result is also low in the region, and the determination cannot be made.

The comparator 131 of the determiner 130 determines in which region of the one-dimensional texture structural feature space of the first physical property and deterioration estimation model the texture structural feature obtained from the analysis data is (S54, S55). The comparator 131 determines that the sample is acceptable when the first texture structural feature obtained from the analysis data is in the region 411 (S56), determines that the sample is not acceptable when the first texture structural feature is in the region 412 (S57), and determines that the determination cannot be made by the first physical property and deterioration estimation model when the first texture structural feature is in the regions 413, 414.

When the comparator 131 determines that the determination cannot be made, the comparator 131 switches the model to be used from the first physical property and deterioration estimation model to the second physical property and deterioration estimation model (S58). The user performs the surface analysis of the sample by the second surface analysis method (S59). The surface analysis data is input from the terminal 210 to the data input unit 182 of the plastic recycling supporting apparatus 100. The feature extraction unit 181 receives the surface analysis data from the data input unit 182, and extracts the second texture structural feature by fitting (S60). Thereafter, the estimator 141 of the physical property and deterioration estimator 140 inputs the first texture structural feature and the second texture structural feature that are the input data to the second physical property and deterioration estimation model to estimate the physical property and the deterioration degree of the sample (the base material) (S61). Since processing after step S61 is the same as the processing after step S33 in the flowchart shown in FIG. 9A, repeated description will be omitted.

The present invention is not limited to the embodiments described above, and includes various modifications. For example, the above-described embodiments have been described in detail for easy understanding of the invention, and are not necessarily limited to the ones having all the configurations described. A part of the configuration of one embodiment can be replaced with the configuration of another embodiment, and the configuration of another embodiment can be added to the configuration of one embodiment. In addition, a part of the configuration of each embodiment may be added, deleted, or replaced with another configuration.

Reference Signs List

| | |
|---|---|
| 11: | processor (CPU) |
| 12: | memory |
| 13: | storage device |
| 14: | input device |
| 15: | output device |
| 16: | communication device |
| 17: | bus |
| 100: | plastic recycling supporting apparatus |
| 110: | first model constructor |
| 111: | learning unit |
| 112: | accuracy calculator |
| 120: | second model constructor |
| 121: | learning unit |
| 122: | accuracy calculator |
| 130: | determiner |
| 131: | comparator |
| 140: | physical property and deterioration estimator |
| 141: | estimator |
| 142: | inverse estimator |
| 150: | blending estimator |
| 151: | estimator |
| 152: | inverse estimator |
| 160: | model selector |
| 161: | searcher |
| 162: | allowable range storage device |
| 163: | model database |
| 170: | plastic database |
| 181: | feature extraction unit |
| 182: | data input unit |
| 200: | network |
| 210: | terminal |
| 211: | display device |
| 212: | input device |
| 221: | differential scanning calorimeter |
| 222: | Fourier transform infrared spectrophotometer |
| 223: | X-ray diffractometer |
| 224: | impact resistance measuring device |
| 225: | melt mass flow rate measuring device |
| 300: | display screen example |
| 301: | model |
| 302: | the number of parameters |
| 303: | surface analysis method |
| 204: | time |
| 305: | measurement cost |
| 306: | physical property estimation accuracy |
| 307: | deterioration estimation accuracy |
| 400: | space |
| 401, 402, 403, 411, 412, 413, 414: | region |
| 500: | input screen |
| 501: | waste plastic information input unit |
| 502: | target specification input unit |
| 503, 504, 505: | prediction condition input unit. |

## Claims

1. A plastic recycling supporting apparatus for supporting plastic recycling in which a plastic is blended with an additive and is recycled into a recycled plastic having a desired physical property, the plastic recycling supporting apparatus (100) comprising:

 a physical property and deterioration estimator (140) configured to estimate, using a physical property and deterioration estimation model, a physical property and a deterioration degree of the plastic based on a texture structural feature extracted from surface analysis data of the plastic; and
 a blending estimator (150) configured to estimate a physical property of the recycled plastic based on the physical property and the deterioration degree of the plastic and a blending condition of the additive using a physical property recovery model, wherein
 the physical property and deterioration estimator (140) estimates a physical property and a deterioration degree of a sample based on a texture structural feature extracted from surface analysis data of the sample, and
 the blending estimator (150) inversely estimates the blending condition of the additive to be blended in the sample based on the physical property and the deterioration degree of the sample, that are estimated by the physical property and deterioration estimator (140), and the desired physical property of the recycled plastic.

2. The plastic recycling supporting apparatus according to claim 1, further comprising:

 a determiner (130) configured to determine whether the sample is acceptable, wherein
 the determiner (130) determines whether the sample is acceptable based on whether the texture structural feature extracted from the surface analysis data of the sample is included in an allowable range corresponding to the desired physical property of the recycled plastic, and
 the allowable range is defined by the blending estimator (150) inversely estimating allowable ranges of the physical property and the deterioration degree allowable for the sample based on the desired physical property of the recycled plastic, and the physical property and deterioration estimator (140) converting the allowable ranges of the physical property and the deterioration degree into a texture structural feature space.

3. The plastic recycling supporting apparatus according to claim 2, further comprising:

 a model database (163) that stores a plurality of the physical property and deterioration estimation models, wherein
 the physical property and deterioration estimation model is stored in association with physical property estimation accuracy, deterioration estimation accuracy, and a surface analysis method, a time, and a measurement cost that are necessary for extracting the texture structural feature to be input to the model.

4. The plastic recycling supporting apparatus according to claim 2, wherein
 in a case where the texture structural feature extracted from the surface analysis data of the sample is a value in a region where the estimation is not able to be performed by the physical property and deterioration estimation model, the determiner (130) determines that the sample is acceptable when a physical property measured for the sample satisfies the allowable range of the physical property allowed for the sample, which is obtained and inversely estimated by the blending estimator based on the desired physical property of the recycled plastic.

5. The plastic recycling supporting apparatus according to claim 2, wherein

 the determiner (130) determines whether the sample is acceptable based on whether the texture structural feature extracted from the surface analysis data of the sample is included in a first allowable range corresponding to the desired physical property of the recycled plastic, and when it is not possible to make the determination based on the first allowable range, the determiner (130) determines whether the sample is acceptable based on whether the texture structural feature is included in a second allowable range corresponding to the desired physical property of the recycled plastic,
 the first allowable range is defined by the physical property and deterioration estimator (140) converting the allowable ranges of the physical property and the deterioration degree into the texture structural feature space using a first physical property and deterioration estimation model, and the second allowable range is defined by the physical property and deterioration estimator (140) converting the allowable ranges of the physical property and the deterioration degree into the texture structural feature space using a second physical property and deterioration estimation model, and

the number of types of the surface analysis method necessary for extracting the texture structural feature to be input into the model in the first physical property and deterioration estimation model is smaller than that in the second physical property and deterioration estimation model.

**6.** The plastic recycling supporting apparatus according to claim 5, wherein in a case where the texture structural feature extracted from the surface analysis data of the sample is a value in a region where the estimation is not able to be performed by the second physical property and deterioration estimation model, the determiner (130) determines that the sample is acceptable when a physical property measured for the sample satisfies the allowable range of the physical property allowed for the sample, which is obtained and inversely estimated by the blending estimator (150) based on the desired physical property of the recycled plastic.

**7.** The plastic recycling supporting apparatus according to claim 3, further comprising:

a plastic database (170) that stores, for each type of plastic, the surface analysis data, physical property data, and deterioration degree data of the plastic, the deterioration degree data being based on a condition of an accelerated deterioration test performed on the plastic; and
a first model constructor (110) configured to construct the physical property and deterioration estimation model by using, as training data, a combination of the texture structural feature extracted from the surface analysis data of the plastic stored in the plastic database (170) with the physical property data and the deterioration degree data of the plastic that are stored in the plastic database (170).

**8.** The plastic recycling supporting apparatus according to claim 7, further comprising:

a second model constructor (120), wherein
the plastic database (170) further stores, for each type of plastic, physical property data of recycled plastic obtained by recycling by blending an additive with the plastic after the accelerated deterioration test and a blending condition of the additive, and
the second model constructor (120) constructs the physical property recovery model by using, as training data, a combination of the physical property data of the recycled plastic stored in the plastic database with the physical property data and deterioration degree data of the plastic and the blending condition of the additive that are stored in the plastic database (170).

**9.** A plastic recycling supporting method using a plastic recycling supporting apparatus (100) for supporting plastic recycling in which a plastic is blended with an additive and is recycled into a recycled plastic having a desired physical property, wherein

the plastic recycling supporting apparatus (100) includes:

a physical property and deterioration estimator (140) configured to estimate, using a physical property and deterioration estimation model, a physical property and a deterioration degree of the plastic based on a texture structural feature extracted from surface analysis data of the plastic; and
a blending estimator (150) configured to estimate a physical property of the recycled plastic based on the physical property and the deterioration degree of the plastic and a blending condition of the additive using a physical property recovery model,

the physical property and deterioration estimator (140) estimates a physical property and a deterioration degree of a sample based on a texture structural feature extracted from surface analysis data of the sample, and
the blending estimator (150) inversely estimates the blending condition of the additive to be blended in the sample based on the physical property and the deterioration degree of the sample, that are estimated by the physical property and deterioration estimator, and the desired physical property of the recycled plastic.

**10.** The plastic recycling supporting method according to claim 9, wherein

the plastic recycling supporting apparatus (100) further includes a determiner (130) configured to determine whether the sample is acceptable,
the determiner (130) determines whether the sample is acceptable based on whether the texture structural feature extracted from the surface analysis data of the sample is included in an allowable range corresponding to the desired physical property of the recycled plastic, and

the allowable range is defined by the blending estimator (150) inversely estimating allowable ranges of the physical property and the deterioration degree allowable for the sample based on the desired physical property of the recycled plastic, and the physical property and deterioration estimator converting the allowable ranges of the physical property and the deterioration degree into a texture structural feature space.

**11.** The plastic recycling supporting method according to claim 10, wherein

the plastic recycling supporting apparatus (100) further includes a model database (163) that stores a plurality of the physical property and deterioration estimation models, and
the physical property and deterioration estimation (140) model is stored in association with physical property estimation accuracy (306), deterioration estimation accuracy (307), and a surface analysis method, a time, and a measurement cost that are necessary for extracting the texture structural feature to be input to the model.

**12.** The plastic recycling supporting method according to claim 10, wherein
in a case where the texture structural feature extracted from the surface analysis data of the sample is a value in a region where the estimation is not able to be performed by the physical property and deterioration estimation model, the determiner (130) determines that the sample is acceptable when a physical property measured for the sample satisfies the allowable range of the physical property allowed for the sample, which is obtained and inversely estimated by the blending estimator (150) based on the desired physical property of the recycled plastic.

**13.** The plastic recycling supporting method according to claim 11, wherein

the plastic recycling supporting apparatus (100) further includes:

a plastic database (170) that stores, for each type of plastic, the surface analysis data, physical property data, and deterioration degree data of the plastic, the deterioration degree data being based on a condition of an accelerated deterioration test performed on the plastic; and
a first model constructor (110),

the first model constructor (110) constructs the physical property and deterioration estimation model by using, as training data, a combination of the texture structural feature extracted from the surface analysis data of the plastic stored in the plastic database (170) with the physical property data and the deterioration degree data of the plastic that are stored in the plastic database.

**14.** The plastic recycling supporting method according to claim 13, wherein

the plastic recycling supporting apparatus (100) further includes a second model constructor (120),
the plastic database (170) further stores, for each type of plastic, physical property data of recycled plastic obtained by recycling by blending an additive with the plastic after the accelerated deterioration test and a blending condition of the additive, and
the second model constructor (120) constructs the physical property recovery model by using, as training data, a combination of the physical property data of the recycled plastic stored in the plastic database (170) with the physical property data and deterioration degree data of the plastic and the blending condition of the additive that are stored in the plastic database (170).

## Patentansprüche

**1.** Kunststoffwiederverwertungs-Unterstützungsvorrichtung zum Unterstützen von Kunststoffwiederverwertung, bei der ein Kunststoff mit einem Zusatzstoff gemischt wird und in einen wiederverwerteten Kunststoff mit einer gewünschten physikalischen Eigenschaft wiederverwertet wird, wobei die Kunststoffwiederverwertungs-Unterstützungsvorrichtung (100) umfasst:

eine Schätzeinrichtung (140) für die physikalische Eigenschaft und die Verschlechterung, die konfiguriert ist, um unter Verwendung eines Schätzmodells für die physikalische Eigenschaft und die Verschlechterung eine physikalische Eigenschaft und einen Verschlechterungsgrad des Kunststoffs basierend auf einem Strukturmerkmal der Textur, das aus Oberflächenanalysedaten des Kunststoffs extrahiert wird, zu schätzen; und
eine Mischungsschätzeinrichtung (150), die konfiguriert ist, um eine physikalische Eigenschaft des wiederverwerteten Kunststoffs basierend auf der physikalischen Eigenschaft und dem Verschlechterungsgrad des Kunststoffs und einer Mischungsbedingung des Zusatzstoffs unter Verwendung eines Wiederherstellungsmodells der physikalischen Eigenschaft zu schätzen, wobei
die Schätzeinrichtung (140) für die physikalische Eigenschaft und die Verschlechterung eine physikalische Eigenschaft und einen Verschlechterungsgrad einer Probe basierend auf einem Strukturmerkmal der Textur, das aus Oberflächenanalysedaten der Probe extrahiert wird, schätzt, und
die Mischungsschätzeinrichtung (150) die Mischungsbedingung des Zusatzstoffs, der in die Probe gemischt werden soll, basierend auf der physikalischen Eigenschaft und dem Verschlechterungsgrad der Probe, die durch die Schätzeinrichtung (140) für die physikalische Eigenschaft und die Verschlechterung geschätzt werden, und der gewünschten physikalischen Eigenschaft des wiederverwerteten Kunststoffs invers schätzt.

**2.** Kunststoffwiederverwertungs-Unterstützungsvorrichtung nach Anspruch 1, ferner umfassend:

eine Bestimmungseinrichtung (130), die konfiguriert ist, um zu bestimmen, ob die Probe akzeptabel ist, wobei
die Bestimmungseinrichtung (130) basierend darauf, ob das Strukturmerkmal der Textur, das aus den Oberflächenanalysedaten der Probe extrahiert wird, in einem zulässigen Bereich enthalten ist, der der gewünschten physikalischen Eigenschaft des wiederverwerteten Kunststoffs entspricht, bestimmt, ob die Probe akzeptabel ist, und
der zulässige Bereich dadurch definiert ist, dass die Mischungsschätzeinrichtung (150) zulässige Bereiche der physikalischen Eigenschaft und des Verschlechterungsgrads, die für die Probe zulässig sind, basierend auf der gewünschten physikalischen Eigenschaft des wiederverwerteten Kunststoffs invers schätzt, und die Schätzeinrichtung (140) für die physikalische Eigenschaft und die Verschlechterung die zulässigen Bereiche der physikalischen Eigenschaft und des Verschlechterungsgrads in einen Strukturmerkmalraum der Textur umwandelt.

**3.** Kunststoffwiederverwertungs-Unterstützungsvorrichtung nach Anspruch 2, ferner umfassend:

eine Modelldatenbank (163), die eine Vielzahl der Schätzmodelle für die physikalische Eigenschaft und die Verschlechterung speichert, wobei
das Schätzmodell für die physikalische Eigenschaft und die Verschlechterung in Verbindung mit einer Genauigkeit der Schätzung der physikalischen Eigenschaft, einer Genauigkeit der Schätzung der Verschlechterung und einem Oberflächenanalyseverfahren, einer Zeit und Messkosten, die zum Extrahieren des Strukturmerkmals der Textur, das in das Modell eingegeben werden soll, erforderlich sind, gespeichert wird.

**4.** Kunststoffwiederverwertungs-Unterstützungsvorrichtung nach Anspruch 2, wobei
in einem Fall, in dem das Strukturmerkmal der Textur, das aus den Oberflächenanalysedaten der Probe extrahiert wird, ein Wert in einem Bereich ist, in dem die Schätzung durch das Schätzmodell für die physikalische Eigenschaft und die Verschlechterung nicht durchgeführt werden kann, die Bestimmungseinrichtung (130) bestimmt, dass die Probe akzeptabel ist, wenn eine physikalische Eigenschaft, die für die Probe gemessen wird, den zulässigen Bereich der physikalischen Eigenschaft, die für die Probe zulässig ist, erfüllt, der durch die Mischungsschätzeinrichtung basierend auf der gewünschten physikalischen Eigenschaft des wiederverwerteten Kunststoffs erhalten und invers geschätzt wird.

**5.** Kunststoffwiederverwertungs-Unterstützungsvorrichtung nach Anspruch 2, wobei

die Bestimmungseinrichtung (130) basierend darauf, ob das Strukturmerkmal der Textur, das aus den Oberflächenanalysedaten der Probe extrahiert wird, in einem ersten zulässigen Bereich enthalten ist, der der gewünschten physikalischen Eigenschaft des wiederverwerteten Kunststoffs entspricht, bestimmt, ob die Probe akzeptabel ist, und wenn es nicht möglich ist, die Bestimmung basierend auf dem ersten zulässigen Bereich vorzunehmen, die Bestimmungseinrichtung (130) basierend darauf, ob das Strukturmerkmal der Textur in einem zweiten zulässigen Bereich enthalten ist, der der gewünschten physikalischen Eigenschaft des wiederverwerteten Kunststoffs entspricht, bestimmt, ob die Probe akzeptabel ist,
der erste zulässige Bereich dadurch definiert ist, dass die Schätzeinrichtung (140) für die physikalische Eigenschaft und die Verschlechterung die zulässigen Bereiche der physikalischen Eigenschaft und des Verschlechterungsgrads unter Verwendung eines ersten Schätzmodells für die physikalische Eigenschaft und die Verschlechterung in den Strukturmerkmalraum der Textur umwandelt, und der zweite zulässige Bereich dadurch definiert ist, dass die Schätzeinrichtung (140) für die physikalische Eigenschaft und die Verschlechterung die zulässigen Bereiche der physikalischen Eigenschaft und des Verschlechterungsgrads unter Verwendung eines zweiten Schätzmodells für die physikalische Eigenschaft und die Verschlechterung in den Strukturmerkmalraum der Textur umwandelt, und
die Anzahl von Typen des Oberflächenanalyseverfahrens, die zum Extrahieren des Strukturmerkmals der Textur, das in das Modell eingegeben werden soll, in dem ersten Schätzmodell für die physikalische Eigenschaft und die Verschlechterung erforderlich ist, kleiner als die in dem zweiten Schätzmodell für die physikalische Eigenschaft und die Verschlechterung ist.

**6.** Kunststoffwiederverwertungs-Unterstützungsvorrichtung nach Anspruch 5, wobei
in einem Fall, in dem das Strukturmerkmal der Textur, das aus den Oberflächenanalysedaten der Probe extrahiert wird, ein Wert in einem Bereich ist, in dem die Schätzung durch das zweite Schätzmodell für die physikalische Eigenschaft und die Verschlechterung nicht durchgeführt werden kann, die Bestimmungseinrichtung (130) bestimmt, dass die Probe akzeptabel ist, wenn eine physikalische Eigenschaft, die für die Probe gemessen wird, den zulässigen Bereich der physikalischen Eigenschaft, die für die Probe zulässig ist, erfüllt, der durch die Mischungsschätzeinrichtung (150) basierend auf der gewünschten physikalischen Eigenschaft des wiederverwerteten Kunststoffs erhalten und invers geschätzt wird.

**7.** Kunststoffwiederverwertungs-Unterstützungsvorrichtung nach Anspruch 3, ferner umfassend:

eine Kunststoffdatenbank (170), die für jeden Typ von Kunststoff die Oberflächenanalysedaten, die Daten der physikalischen Eigenschaft und die Verschlechterungsgraddaten des Kunststoffs speichert, wobei die Verschlechterungsgraddaten auf einer Bedingung eines beschleunigten Verschlechterungstests basieren, der an dem Kunststoff durchgeführt wird; und
eine erste Modellaufbaueinrichtung (110), die konfiguriert ist, um das Schätzmodell für die physikalische Eigenschaft und die Verschlechterung durch Verwenden einer Kombination des Strukturmerkmals der Textur, das aus den Oberflächenanalysedaten des Kunststoffs extrahiert wird, die in der Kunststoffdatenbank (170) gespeichert sind, mit den Daten der physikalischen Eigenschaft und den Verschlechterungsgraddaten des Kunststoffs, die in der Kunststoffdatenbank (170) gespeichert sind, als Trainingsdaten aufzubauen.

**8.** Kunststoffwiederverwertungs-Unterstützungsvorrichtung nach Anspruch 7, ferner umfassend:

eine zweite Modellaufbaueinrichtung (120), wobei
die Kunststoffdatenbank (170) ferner für jeden Typ von Kunststoff Daten der physikalischen Eigenschaft des wiederverwerteten Kunststoffs, der durch Wiederverwertung durch Mischen eines Zusatzstoffs mit dem Kunststoff nach dem beschleunigten Verschlechterungstest erhalten wird, und eine Mischungsbedingung des Zusatzstoffs speichert, und
die zweite Modellaufbaueinrichtung (120) das Wiederherstellungsmodell der physikalischen Eigenschaft durch Verwenden einer Kombination der Daten der physikalischen Eigenschaft des wiederverwerteten Kunststoffs, die in der Kunststoffdatenbank gespeichert sind, mit den Daten der physikalischen Eigenschaft und den Verschlechterungsgraddaten des Kunststoffs und der Mischungsbedingung des Zusatzstoffs, die in der Kunststoffdatenbank (170) gespeichert sind, als Trainingsdaten aufbaut.

**9.** Kunststoffwiederverwertungs-Unterstützungsverfahren unter Verwendung einer Kunststoffwiederverwertungs-Unterstützungsvorrichtung (100) zum Unterstützen von Kunststoffwiederverwertung, bei der ein Kunststoff mit einem Zusatzstoff gemischt wird und in einen wiederverwerteten Kunststoff mit einer gewünschten physikalischen Eigenschaft wiederverwertet wird, wobei

die Kunststoffwiederverwertungs-Unterstützungsvorrichtung (100) enthält:

eine Schätzeinrichtung (140) für die physikalische Eigenschaft und die Verschlechterung, die konfiguriert ist, um unter Verwendung eines Schätzmodells für die physikalische Eigenschaft und die Verschlechterung eine physikalische Eigenschaft und einen Verschlechterungsgrad des Kunststoffs basierend auf einem Strukturmerkmal der Textur, das aus Oberflächenanalysedaten des Kunststoffs extrahiert wird, zu schätzen; und
eine Mischungsschätzeinrichtung (150), die konfiguriert ist, um eine physikalische Eigenschaft des wiederverwerteten Kunststoffs basierend auf der physikalischen Eigenschaft und dem Verschlechterungsgrad des Kunststoffs und einer Mischungsbedingung des Zusatzstoffs unter Verwendung eines Wiederherstellungsmodells der physikalischen Eigenschaft zu schätzen, wobei

die Schätzeinrichtung (140) für die physikalische Eigenschaft und die Verschlechterung eine physikalische Eigenschaft und einen Verschlechterungsgrad einer Probe basierend auf einem Strukturmerkmal der Textur, das aus Oberflächenanalysedaten der Probe extrahiert wird, schätzt, und
die Mischungsschätzeinrichtung (150) die Mischungsbedingung des Zusatzstoffs, der in die Probe gemischt werden soll, basierend auf der physikalischen Eigenschaft und dem Verschlechterungsgrad der Probe, die durch die Schätzeinrichtung für die physikalische Eigenschaft und die Verschlechterung geschätzt werden, und der gewünschten physikalischen Eigenschaft des wiederverwerteten Kunststoffs invers schätzt.

**10.** Kunststoffwiederverwertungs-Unterstützungsverfahren nach Anspruch 9, wobei

die Kunststoffwiederverwertungs-Unterstützungsvorrichtung (100) ferner eine Bestimmungseinrichtung (130) enthält, die konfiguriert ist, um zu bestimmen, ob die Probe akzeptabel ist, wobei
die Bestimmungseinrichtung (130) basierend darauf, ob das Strukturmerkmal der Textur, das aus den Oberflächenanalysedaten der Probe extrahiert wird, in einem zulässigen Bereich enthalten ist, der der gewünschten physikalischen Eigenschaft des wiederverwerteten Kunststoffs entspricht, bestimmt, ob die Probe akzeptabel ist, und
der zulässige Bereich dadurch definiert ist, dass die Mischungsschätzeinrichtung (150) zulässige Bereiche der physikalischen Eigenschaft und des Verschlechterungsgrads, die für die Probe zulässig sind, basierend auf der gewünschten physikalischen Eigenschaft des wiederverwerteten Kunststoffs invers schätzt, und die Schätzeinrichtung für die physikalische Eigenschaft und die Verschlechterung die zulässigen Bereiche der physikalischen Eigenschaft und des Verschlechterungsgrads in einen Strukturmerkmalraum der Textur umwandelt.

**11.** Kunststoffwiederverwertungs-Unterstützungsverfahren nach Anspruch 10, wobei

die Kunststoffwiederverwertungs-Unterstützungsvorrichtung (100) ferner eine Modelldatenbank (163) enthält, die eine Vielzahl der Schätzmodelle für die physikalische Eigenschaft und die Verschlechterung speichert, und das Schätzmodell für die physikalische Eigenschaft und die Verschlechterung (140) in Verbindung mit einer Genauigkeit der Schätzung der physikalischen Eigenschaft (306), einer Genauigkeit der Schätzung der Verschlechterung (307) und einem Oberflächenanalyseverfahren, einer Zeit und Messkosten, die zum Extrahieren des Strukturmerkmals der Textur, das in das Modell eingegeben werden soll, erforderlich sind, gespeichert wird.

**12.** Kunststoffwiederverwertungs-Unterstützungsverfahren nach Anspruch 10, wobei
in einem Fall, in dem das Strukturmerkmal der Textur, das aus den Oberflächenanalysedaten der Probe extrahiert wird, ein Wert in einem Bereich ist, in dem die Schätzung durch das Schätzmodell für die physikalische Eigenschaft und die Verschlechterung nicht durchgeführt werden kann, die Bestimmungseinrichtung (130) bestimmt, dass die Probe akzeptabel ist, wenn eine physikalische Eigenschaft, die für die Probe gemessen wird, den zulässigen Bereich der physikalischen Eigenschaft, die für die Probe zulässig ist, erfüllt, der durch die Mischungsschätzeinrichtung (150) basierend auf der gewünschten physikalischen Eigenschaft des wiederverwerteten Kunststoffs erhalten und invers geschätzt wird.

**13.** Kunststoffwiederverwertungs-Unterstützungsverfahren nach Anspruch 11, wobei

die Kunststoffwiederverwertungs-Unterstützungsvorrichtung (100) ferner enthält:

eine Kunststoffdatenbank (170), die für jeden Typ von Kunststoff die Oberflächenanalysedaten, die Daten der physikalischen Eigenschaft und die Verschlechterungsgraddaten des Kunststoffs speichert, wobei die Verschlechterungsgraddaten auf einer Bedingung eines beschleunigten Verschlechterungstests basieren, der an dem Kunststoff durchgeführt wird; und
eine erste Modellaufbaueinrichtung (110), wobei

die erste Modellaufbaueinrichtung (110) das Schätzmodell für die physikalische Eigenschaft und die Verschlechterung durch Verwenden einer Kombination des Strukturmerkmals der Textur, das aus den Oberflächenanalysedaten des Kunststoffs extrahiert wird, die in der Kunststoffdatenbank (170) gespeichert sind, mit den Daten der physikalischen Eigenschaft und den Verschlechterungsgraddaten des Kunststoffs, die in der Kunststoffdatenbank gespeichert sind, als Trainingsdaten aufbaut.

**14.** Kunststoffwiederverwertungs-Unterstützungsverfahren nach Anspruch 13, wobei

die Kunststoffwiederverwertungs-Unterstützungsvorrichtung (100) ferner eine zweite Modellaufbaueinrichtung (120) enthält,
die Kunststoffdatenbank (170) ferner für jeden Typ von Kunststoff Daten der physikalischen Eigenschaft des wiederverwerteten Kunststoffs, der durch Wiederverwertung durch Mischen eines Zusatzstoffs mit dem Kunststoff nach dem beschleunigten Verschlechterungstest erhalten wird, und eine Mischungsbedingung des Zusatzstoffs speichert, und
die zweite Modellaufbaueinrichtung (120) das Wiederherstellungsmodell der physikalischen Eigenschaft durch Verwenden einer Kombination der Daten der physikalischen Eigenschaft des wiederverwerteten Kunststoffs, die in der Kunststoffdatenbank (170) gespeichert sind, mit den Daten der physikalischen Eigenschaft und den Verschlechterungsgraddaten des Kunststoffs und der Mischungsbedingung des Zusatzstoffs, die in der Kunststoffdatenbank (170) gespeichert sind, als Trainingsdaten aufbaut.

## Revendications

**1.** Appareil de support de recyclage de plastique pour supporter un recyclage de plastique dans lequel un plastique est mélangé avec un additif et est recyclé en un plastique recyclé ayant une propriété physique souhaitée, l'appareil de support de recyclage de plastique (100) comprenant :

un estimateur de détérioration et de propriété physique (140) configuré pour estimer, en utilisant un modèle d'estimation de détérioration et de propriété physique, une propriété physique et un degré de détérioration du plastique sur la base d'une caractéristique structurelle de texture extraite de données d'analyse de surface du plastique ; et
un estimateur de mélange (150) configuré pour estimer une propriété physique du plastique recyclé sur la base de la propriété physique et du degré de détérioration du plastique et d'une condition de mélange de l'additif en utilisant un modèle de récupération de propriété physique, dans lequel
l'estimateur de détérioration et de propriété physique (140) estime une propriété physique et un degré de détérioration d'un échantillon sur la base d'une caractéristique structurelle de texture extraite de données d'analyse de surface de l'échantillon, et
l'estimateur de mélange (150) estime inversement la condition de mélange de l'additif à mélanger dans l'échantillon sur la base de la propriété physique et du degré de détérioration de l'échantillon, qui sont estimés par l'estimateur de détérioration et de propriété physique (140), et de la propriété physique souhaitée du plastique recyclé.

**2.** Appareil de support de recyclage de plastique selon la revendication 1, comprenant en outre :

un dispositif de détermination (130) configuré pour déterminer si l'échantillon est acceptable, dans lequel
le dispositif de détermination (130) détermine si l'échantillon est acceptable sur la base du fait que la caractéristique structurelle de texture extraite des données d'analyse de surface de l'échantillon est incluse ou non dans une plage admissible correspondant à la propriété physique souhaitée du plastique recyclé, et
la plage admissible est définie par l'estimateur de mélange (150) estimant inversement des plages admissibles de la propriété physique et du degré de détérioration admissibles pour l'échantillon sur la base de la propriété physique souhaitée du plastique recyclé, et l'estimateur de détérioration et de propriété physique (140) convertissant les plages admissibles de la propriété physique et du degré de détérioration en un espace de caractéristique structurelle de texture.

**3.** Appareil de support de recyclage de plastique selon la revendication 2, comprenant en outre :

une base de données de modèles (163) qui stocke une pluralité des modèles d'estimation de détérioration et de propriété physique, dans lequel
le modèle d'estimation de détérioration et de propriété physique est stocké en association avec une précision d'estimation de propriété physique, une précision d'estimation de détérioration, et un procédé d'analyse de surface, un temps, et un coût de mesure qui sont nécessaires pour extraire la caractéristique structurelle de texture devant être entrée dans le modèle.

**4.** Appareil de support de recyclage de plastique selon la revendication 2, dans lequel
dans un cas où la caractéristique structurelle de texture extraite des données d'analyse de surface de l'échantillon est une valeur dans une région où l'estimation ne peut pas être effectuée par le modèle d'estimation de détérioration et de propriété physique, le dispositif de détermination (130) détermine que l'échantillon est acceptable lorsqu'une propriété physique mesurée pour l'échantillon satisfait la plage admissible de la propriété physique admissible pour l'échantillon, qui est obtenue et estimée inversement par l'estimateur de mélange sur la base de la propriété physique souhaitée du plastique recyclé.

**5.** Appareil de support de recyclage de plastique selon la revendication 2, dans lequel

le dispositif de détermination (130) détermine si l'échantillon est acceptable sur la base du fait que la caractéristique structurelle de texture extraite des données d'analyse de surface de l'échantillon est incluse ou non dans une première plage admissible correspondant à la propriété physique souhaitée du plastique recyclé, et lorsqu'il n'est pas possible d'effectuer la détermination sur la base de la première plage admissible, le dispositif de détermination (130) détermine si l'échantillon est acceptable sur la base du fait que la caractéristique structurelle de texture est incluse ou non dans une seconde plage admissible correspondant à la propriété physique souhaitée du plastique recyclé,
la première plage admissible est définie par l'estimateur de détérioration et de propriété physique (140) convertissant les plages admissibles de la propriété physique et du degré de détérioration en l'espace de caractéristique structurelle de texture en utilisant un premier modèle d'estimation de détérioration et de propriété physique, et la seconde plage admissible est définie par l'estimateur de détérioration et de propriété physique (140) convertissant les plages admissibles de la propriété physique et du degré de détérioration en l'espace de caractéristique structurelle de texture en utilisant un second modèle d'estimation de détérioration et de propriété physique, et
le nombre de types du procédé d'analyse de surface nécessaires pour extraire la caractéristique structurelle de texture devant être entrée dans le modèle dans le premier modèle d'estimation de détérioration et de propriété physique est inférieur à celui dans le second modèle d'estimation de détérioration et de propriété physique.

**6.** Appareil de support de recyclage de plastique selon la revendication 5, dans lequel
dans un cas où la caractéristique structurelle de texture extraite des données d'analyse de surface de l'échantillon est une valeur dans une région où l'estimation ne peut pas être effectuée par le second modèle d'estimation de détérioration et de propriété physique, le dispositif de détermination (130) détermine que l'échantillon est acceptable lorsqu'une propriété physique mesurée pour l'échantillon satisfait la plage admissible de la propriété physique admissible pour l'échantillon, qui est obtenue et estimée inversement par l'estimateur de mélange (150) sur la base de la propriété physique souhaitée du plastique recyclé.

**7.** Appareil de support de recyclage de plastique selon la revendication 3, comprenant en outre :

une base de données de plastiques (170) qui stocke, pour chaque type de plastique, les données d'analyse de surface, les données de propriété physique et les données de degré de détérioration du plastique, les données de degré de détérioration étant basées sur une condition d'un test de détérioration accéléré effectué sur le plastique ; et
un premier constructeur de modèle (110) configuré pour construire le modèle d'estimation de détérioration et de propriété physique en utilisant, en tant que données d'apprentissage, une combinaison de la caractéristique structurelle de texture extraite des données d'analyse de surface du plastique stockées dans la base de données de plastiques (170) avec les données de propriété physique et les données de degré de détérioration du plastique qui sont stockées dans la base de données de plastiques (170).

**8.** Appareil de support de recyclage de plastique selon la revendication 7, comprenant en outre :

un second constructeur de modèle (120), dans lequel
la base de données de plastiques (170) stocke en outre, pour chaque type de plastique, des données de propriété physique de plastique recyclé obtenues par recyclage en mélangeant un additif avec le plastique après le test de détérioration accéléré et une condition de mélange de l'additif, et
le second constructeur de modèle (120) construit le modèle de récupération de propriété physique en utilisant, en tant que données d'apprentissage, une combinaison des données de propriété physique du plastique recyclé stockées dans la base de données de plastiques avec les données de propriété physique et les données de degré de détérioration du plastique et la condition de mélange de l'additif qui sont stockées dans la base de données de plastiques (170).

**9.** Procédé de support de recyclage de plastique utilisant un appareil de support de recyclage de plastique (100) pour supporter un recyclage de plastique dans lequel un plastique est mélangé avec un additif et est recyclé en un plastique recyclé ayant une propriété physique souhaitée, dans lequel

l'appareil de support de recyclage de plastique (100) comprend :

un estimateur de détérioration et de propriété physique (140) configuré pour estimer, en utilisant un modèle d'estimation de détérioration et de propriété physique, une propriété physique et un degré de détérioration du plastique sur la base d'une caractéristique structurelle de texture extraite de données d'analyse de surface du plastique ; et
un estimateur de mélange (150) configuré pour estimer une propriété physique du plastique recyclé sur la base de la propriété physique et du degré de détérioration du plastique et d'une condition de mélange de l'additif en utilisant un modèle de récupération de propriété physique,

l'estimateur de détérioration et de propriété physique (140) estime une propriété physique et un degré de détérioration d'un échantillon sur la base d'une caractéristique structurelle de texture extraite de données d'analyse de surface de l'échantillon, et
l'estimateur de mélange (150) estime inversement la condition de mélange de l'additif à mélanger dans l'échantillon sur la base de la propriété physique et du degré de détérioration de l'échantillon, qui sont estimés par l'estimateur de détérioration et de propriété physique, et de la propriété physique souhaitée du plastique recyclé.

**10.** Procédé de support de recyclage de plastique selon la revendication 9, dans lequel

l'appareil de support de recyclage de plastique (100) comprend en outre un dispositif de détermination (130) configuré pour déterminer si l'échantillon est acceptable,
le dispositif de détermination (130) détermine si l'échantillon est acceptable sur la base du fait que la caractéristique structurelle de texture extraite des données d'analyse de surface de l'échantillon est incluse ou non dans une plage admissible correspondant à la propriété physique souhaitée du plastique recyclé, et
la plage admissible est définie par l'estimateur de mélange (150) estimant inversement des plages admissibles de la propriété physique et du degré de détérioration admissibles pour l'échantillon sur la base de la propriété physique souhaitée du plastique recyclé, et l'estimateur de détérioration et de propriété physique convertissant les plages admissibles de la propriété physique et du degré de détérioration en un espace de caractéristique structurelle de texture.

**11.** Procédé de support de recyclage de plastique selon la revendication 10, dans lequel

l'appareil de support de recyclage de plastique (100) comprend en outre une base de données de modèles (163) qui stocke une pluralité des modèles d'estimation de détérioration et de propriété physique, et
le modèle d'estimation de détérioration et de propriété physique (140) est stocké en association avec une précision d'estimation de propriété physique (306), une précision d'estimation de détérioration (307), et un procédé d'analyse de surface, un temps, et un coût de mesure qui sont nécessaires pour extraire la caractéristique structurelle de texture devant être entrée dans le modèle.

**12.** Procédé de support de recyclage de plastique selon la revendication 10, dans lequel
dans un cas où la caractéristique structurelle de texture extraite des données d'analyse de surface de l'échantillon est une valeur dans une région où l'estimation ne peut pas être effectuée par le modèle d'estimation de détérioration et de propriété physique, le dispositif de détermination (130) détermine que l'échantillon est acceptable lorsqu'une propriété physique mesurée pour l'échantillon satisfait la plage admissible de la propriété physique admissible pour l'échantillon, qui est obtenue et estimée inversement par l'estimateur de mélange (150) sur la base de la propriété physique souhaitée du plastique recyclé.

**13.** Procédé de support de recyclage de plastique selon la revendication 11, dans lequel

l'appareil de support de recyclage de plastique (100) comprend en outre :

une base de données de plastiques (170) qui stocke, pour chaque type de plastique, les données d'analyse de surface, les données de propriété physique et les données de degré de détérioration du plastique, les données de degré de détérioration étant basées sur une condition d'un test de détérioration accéléré effectué sur le plastique ; et

un premier constructeur de modèle (110),

le premier constructeur de modèle (110) construit le modèle d'estimation de détérioration et de propriété physique en utilisant, en tant que données d'apprentissage, une combinaison de la caractéristique structurelle de texture extraite des données d'analyse de surface du plastique stockées dans la base de données de plastiques (170) avec les données de propriété physique et les données de degré de détérioration du plastique qui sont stockées dans la base de données de plastiques.

**14.** Procédé de support de recyclage de plastique selon la revendication 13, dans lequel

l'appareil de support de recyclage de plastique (100) comprend en outre un second constructeur de modèle (120),
la base de données de plastiques (170) stocke en outre, pour chaque type de plastique, des données de propriété physique de plastique recyclé obtenues par recyclage en mélangeant un additif avec le plastique après le test de détérioration accéléré et une condition de mélange de l'additif, et
le second constructeur de modèle (120) construit le modèle de récupération de propriété physique en utilisant, en tant que données d'apprentissage, une combinaison des données de propriété physique du plastique recyclé stockées dans la base de données de plastiques (170) avec les données de propriété physique et les données de degré de détérioration du plastique et la condition de mélange de l'additif qui sont stockées dans la base de données de plastiques (170).

[FIG. 1A]

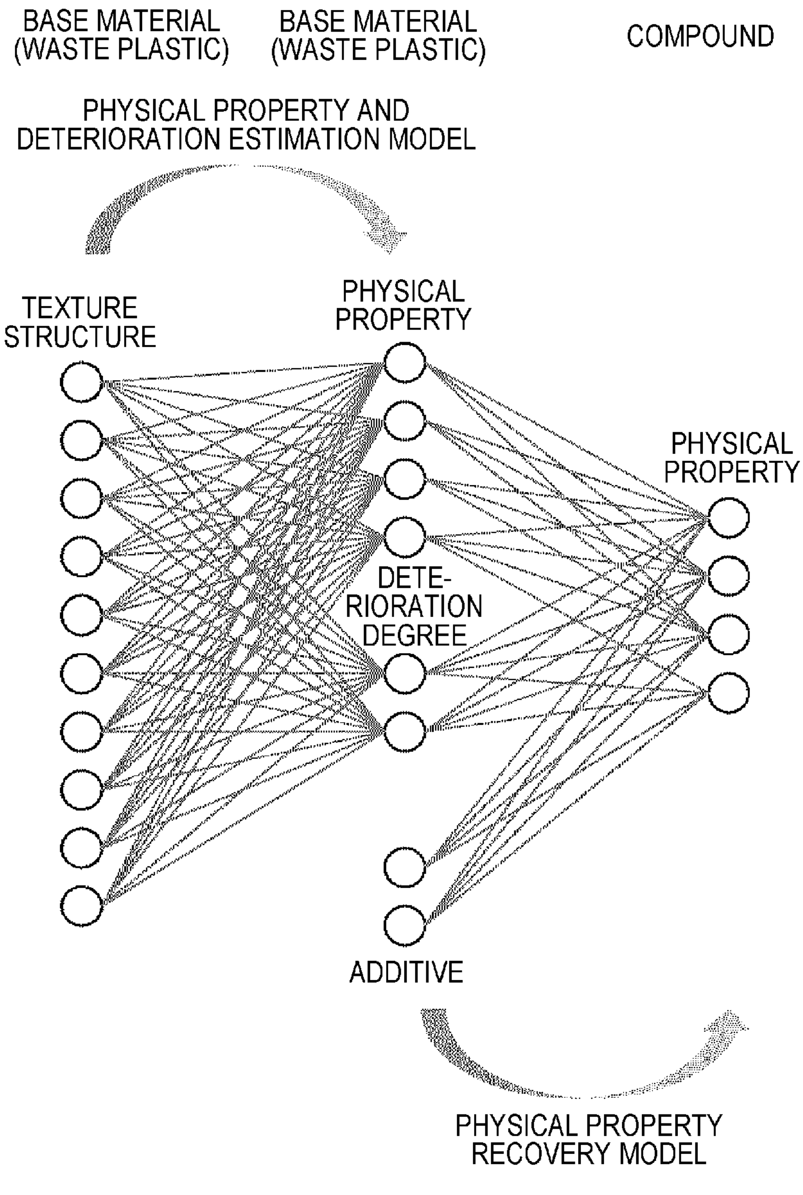
BASE MATERIAL
(WASTE PLASTIC)
BASE MATERIAL
(WASTE PLASTIC)
COMPOUND
PHYSICAL PROPERTY AND
DETERIORATION ESTIMATION MODEL
TEXTURE
STRUCTURE
PHYSICAL
PROPERTY
DETE-
RIORATION
DEGREE
PHYSICAL
PROPERTY
ADDITIVE
PHYSICAL PROPERTY
RECOVERY MODEL

[FIG. 1B]

| | | |
|---|---|---|
| ■ BASE MATERIAL (WASTE PLASTIC) TEXTURE STRUCTURE [SURFACE ANALYSIS METHOD] | | |
| | THERMAL ANALYSIS (DSC, TG-DTA, OR THE LIKE) | |
| | X-RAY DIFFRACTION (XRD) | |
| | INFRARED SPECTROSCOPY (FTIR, DISPERSED IR) | |
| | MOLECULAR WEIGHT (GPC) | |
| | MICROSCOPE (OPTICAL MICROSCOPE, ELECTRON MICROSCOPE) | |
| ■ BASE MATERIAL (WASTE PLASTIC) PHYSICAL PROPERTY/COMPOUND PHYSICAL PROPERTY | | |
| | PHYSICAL AND MECHANICAL PROPERTY | TENSILE STRENGTH, ELONGATION AT BREAK, TENSILE ELASTIC MODULUS, IMPACT STRENGTH |
| | THERMAL PROPERTY AND PROPERTY AT THE TIME OF MOLDING | HARDNESS, LINEAR EXPANSION COEFFICIENT, DEFLECTION TEMPERATURE UNDER LOAD, MFR |
| | ELECTRICAL PROPERTY | VOLUME RESISTIVITY, DIELECTRIC BREAKDOWN STRENGTH |
| | COMBUSTIBILITY AND WATER ABSORPTION PROPERTY | COMBUSTIBILITY AND WATER ABSORPTION |
| ■ DEGRADATION DEGREE | | |
| | OXIDATION | |
| | THERMAL DEGRADATION | |
| ■ ADDITIVE | | |
| | FILLER | |
| | CROSSLINKING AGENT | |
| | CONDUCTIVE MATERIAL | |
| | ANTIOXIDANT | |
| | ULTRAVIOLET ABSORBENT | |
| | FLAME RETARDANT | |

[FIG. 2]

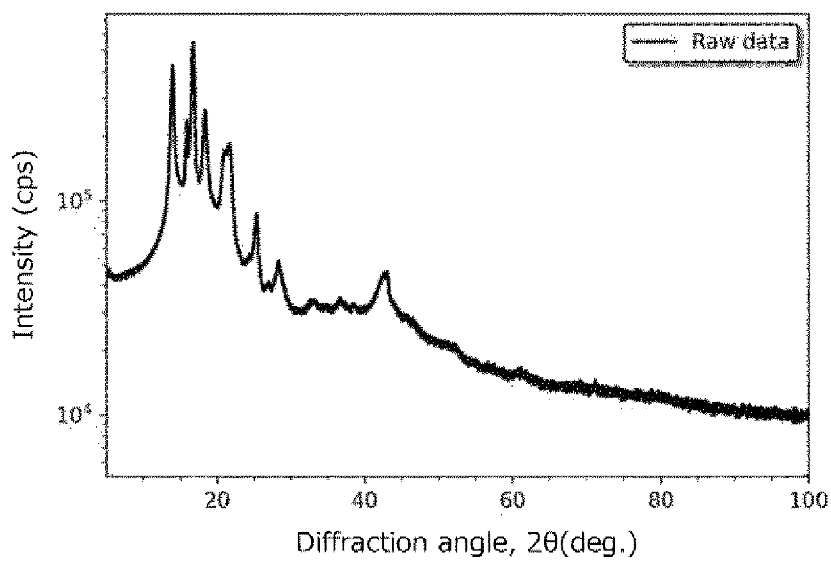
Raw data
Intensity (cps)
10⁵
10⁴
20
40
60
80
100
Diffraction angle, 2θ(deg.)

[FIG. 3]

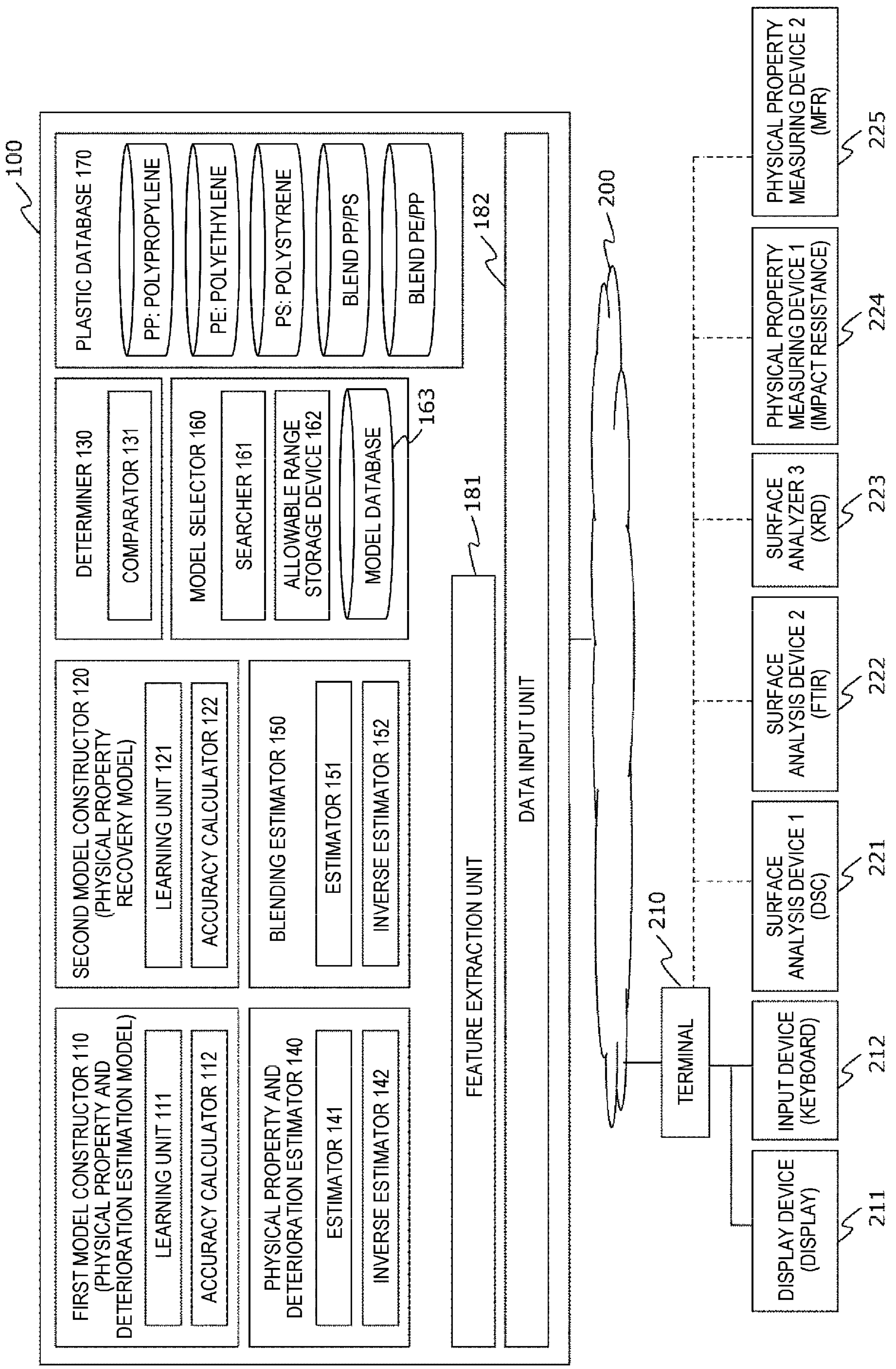
100
FIRST MODEL CONSTRUCTOR 110 (PHYSICAL PROPERTY AND DETERIORATION ESTIMATION MODEL)
LEARNING UNIT 111
ACCURACY CALCULATOR 112
SECOND MODEL CONSTRUCTOR 120 (PHYSICAL PROPERTY RECOVERY MODEL)
LEARNING UNIT 121
ACCURACY CALCULATOR 122
DETERMINER 130
COMPARATOR 131
PLASTIC DATABASE 170
PP: POLYPROPYLENE
PE: POLYETHYLENE
PS: POLYSTYRENE
BLEND PP/PS
BLEND PE/PP
PHYSICAL PROPERTY AND DETERIORATION ESTIMATOR 140
ESTIMATOR 141
INVERSE ESTIMATOR 142
BLENDING ESTIMATOR 150
ESTIMATOR 151
INVERSE ESTIMATOR 152
MODEL SELECTOR 160
SEARCHER 161
ALLOWABLE RANGE STORAGE DEVICE 162
MODEL DATABASE
163
FEATURE EXTRACTION UNIT
181
DATA INPUT UNIT
182
200
TERMINAL
210
DISPLAY DEVICE (DISPLAY)
211
INPUT DEVICE (KEYBOARD)
212
SURFACE ANALYSIS DEVICE 1 (DSC)
221
SURFACE ANALYSIS DEVICE 2 (FTIR)
222
SURFACE ANALYZER 3 (XRD)
223
PHYSICAL PROPERTY MEASURING DEVICE 1 (IMPACT RESISTANCE)
224
PHYSICAL PROPERTY MEASURING DEVICE 2 (MFR)
225

[FIG. 4]

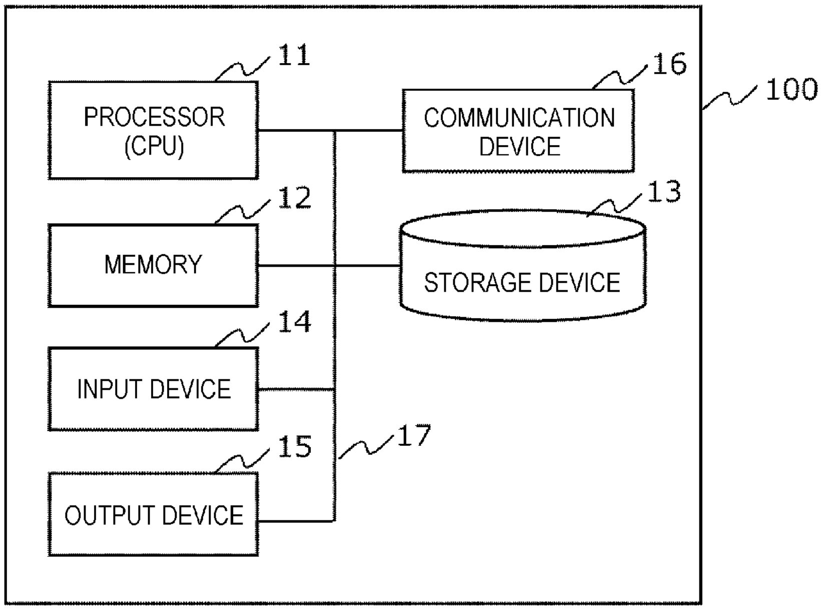
11
16
100
PROCESSOR (CPU)
COMMUNICATION DEVICE
12
13
MEMORY
STORAGE DEVICE
14
INPUT DEVICE
15
17
OUTPUT DEVICE

[FIG. 5]

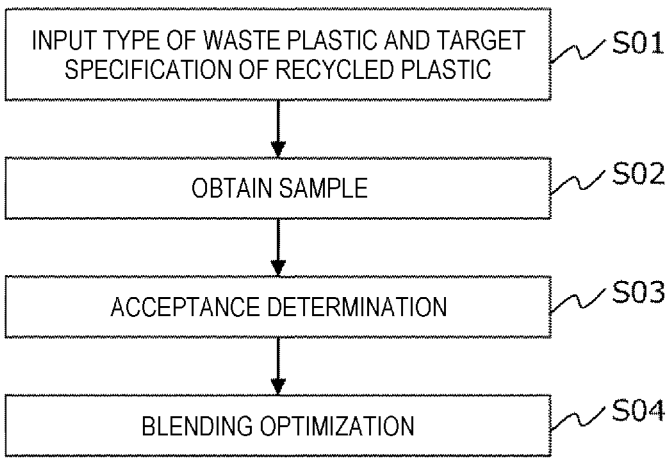
INPUT TYPE OF WASTE PLASTIC AND TARGET SPECIFICATION OF RECYCLED PLASTIC
S01
OBTAIN SAMPLE
S02
ACCEPTANCE DETERMINATION
S03
BLENDING OPTIMIZATION
S04

[FIG. 6]

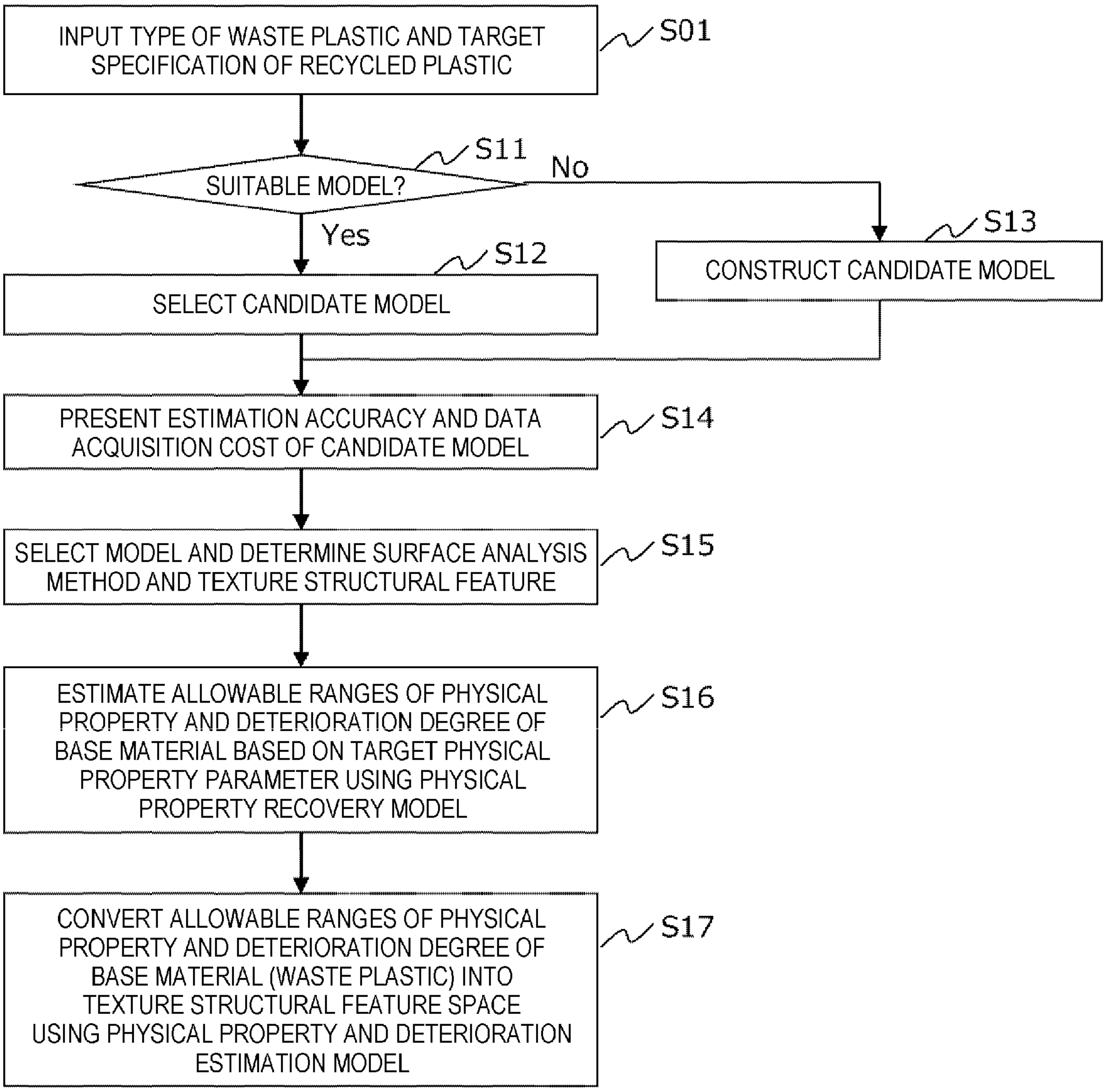
INPUT TYPE OF WASTE PLASTIC AND TARGET SPECIFICATION OF RECYCLED PLASTIC
S01
SUITABLE MODEL?
S11
No
Yes
S12
SELECT CANDIDATE MODEL
S13
CONSTRUCT CANDIDATE MODEL
PRESENT ESTIMATION ACCURACY AND DATA ACQUISITION COST OF CANDIDATE MODEL
S14
SELECT MODEL AND DETERMINE SURFACE ANALYSIS METHOD AND TEXTURE STRUCTURAL FEATURE
S15
ESTIMATE ALLOWABLE RANGES OF PHYSICAL PROPERTY AND DETERIORATION DEGREE OF BASE MATERIAL BASED ON TARGET PHYSICAL PROPERTY PARAMETER USING PHYSICAL PROPERTY RECOVERY MODEL
S16
CONVERT ALLOWABLE RANGES OF PHYSICAL PROPERTY AND DETERIORATION DEGREE OF BASE MATERIAL (WASTE PLASTIC) INTO TEXTURE STRUCTURAL FEATURE SPACE USING PHYSICAL PROPERTY AND DETERIORATION ESTIMATION MODEL
S17

[FIG. 7]

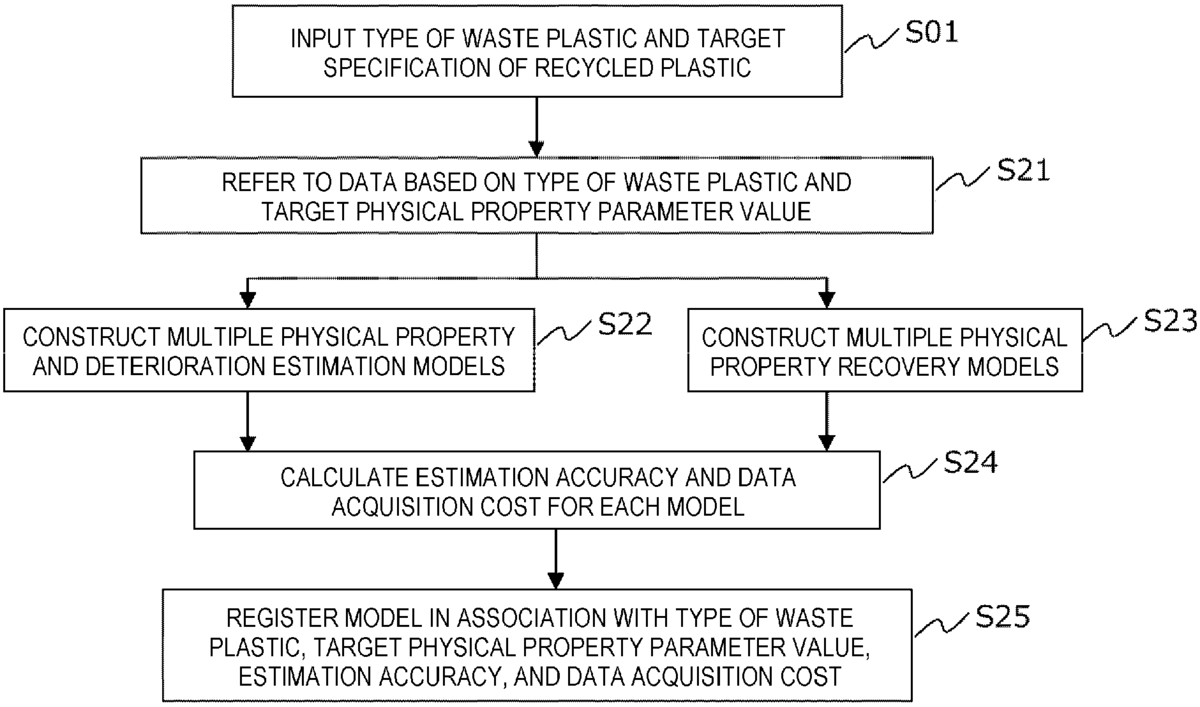
INPUT TYPE OF WASTE PLASTIC AND TARGET SPECIFICATION OF RECYCLED PLASTIC
S01
REFER TO DATA BASED ON TYPE OF WASTE PLASTIC AND TARGET PHYSICAL PROPERTY PARAMETER VALUE
S21
CONSTRUCT MULTIPLE PHYSICAL PROPERTY AND DETERIORATION ESTIMATION MODELS
S22
CONSTRUCT MULTIPLE PHYSICAL PROPERTY RECOVERY MODELS
S23
CALCULATE ESTIMATION ACCURACY AND DATA ACQUISITION COST FOR EACH MODEL
S24
REGISTER MODEL IN ASSOCIATION WITH TYPE OF WASTE PLASTIC, TARGET PHYSICAL PROPERTY PARAMETER VALUE, ESTIMATION ACCURACY, AND DATA ACQUISITION COST
S25

[FIG. 8]

300

| MODEL | THE NUMBER OF PARAMETERS | SURFACE ANALYSIS METHOD | TIME | MEASUREMENT COST | PHYSICAL PROPERTY ESTIMATION ACCURACY | DETERIORATION ESTIMATION ACCURACY |
|---|---|---|---|---|---|---|
| 1 | 20 | DSC | 1h | 100 | 0.75 | 0.70 |
| 2 | 50 | DSC,FTIR | 1h05min | 220 | 0.80 | 0.75 |
| 3 | 65 | DSC, FTIR, XRD | 2h05min | 350 | 0.95 | 0.80 |
| 4 | 35 | DSC, XRD | 2h | 250 | 0.90 | 0.80 |

301 302 303 304 305 306 307

[FIG. 9A]

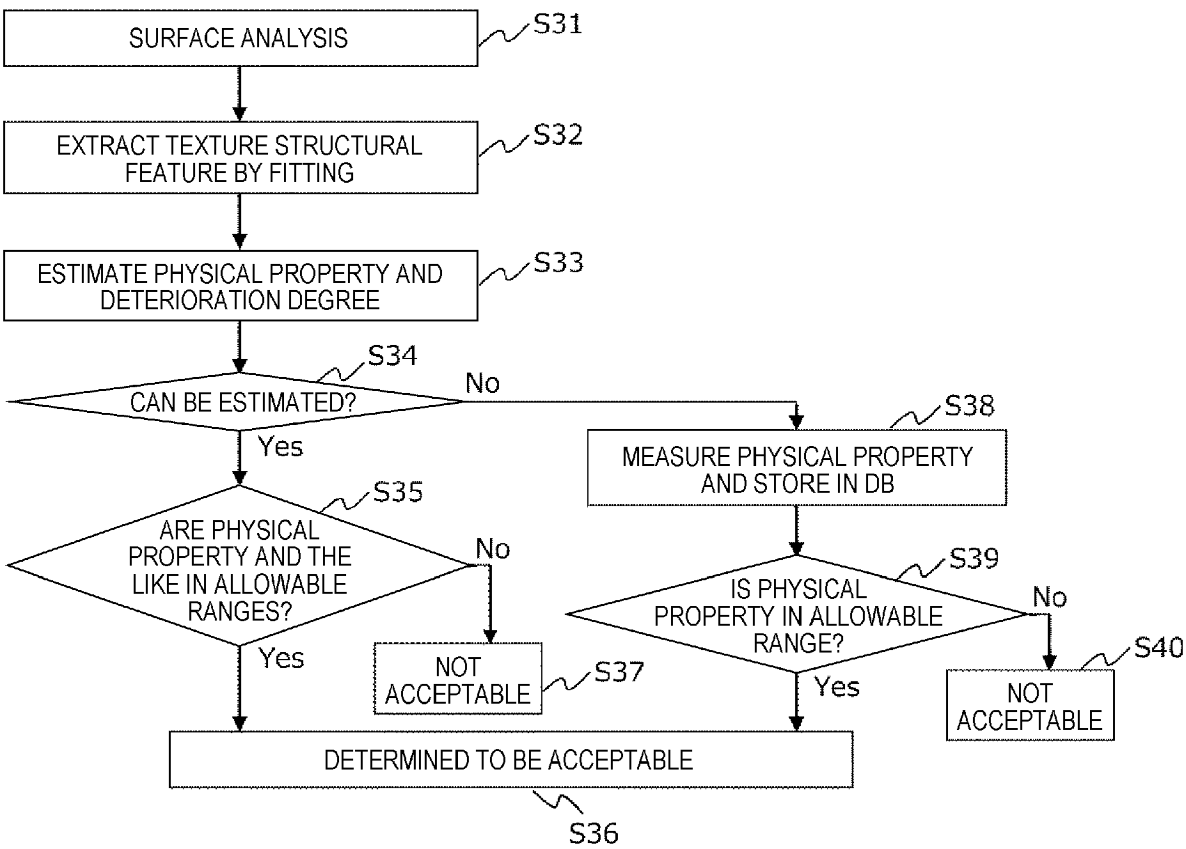
SURFACE ANALYSIS
S31
EXTRACT TEXTURE STRUCTURAL FEATURE BY FITTING
S32
ESTIMATE PHYSICAL PROPERTY AND DETERIORATION DEGREE
S33
CAN BE ESTIMATED?
S34
No
Yes
MEASURE PHYSICAL PROPERTY AND STORE IN DB
S38
ARE PHYSICAL PROPERTY AND THE LIKE IN ALLOWABLE RANGES?
S35
No
Yes
NOT ACCEPTABLE
S37
IS PHYSICAL PROPERTY IN ALLOWABLE RANGE?
S39
No
Yes
NOT ACCEPTABLE
S40
DETERMINED TO BE ACCEPTABLE
S36

[FIG. 9B]

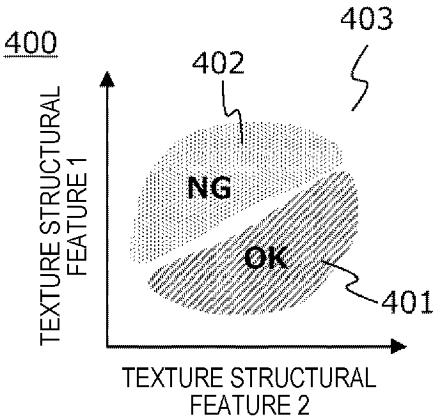
400
403
402
NG
OK
401
TEXTURE STRUCTURAL FEATURE 1
TEXTURE STRUCTURAL FEATURE 2

[FIG. 10A]

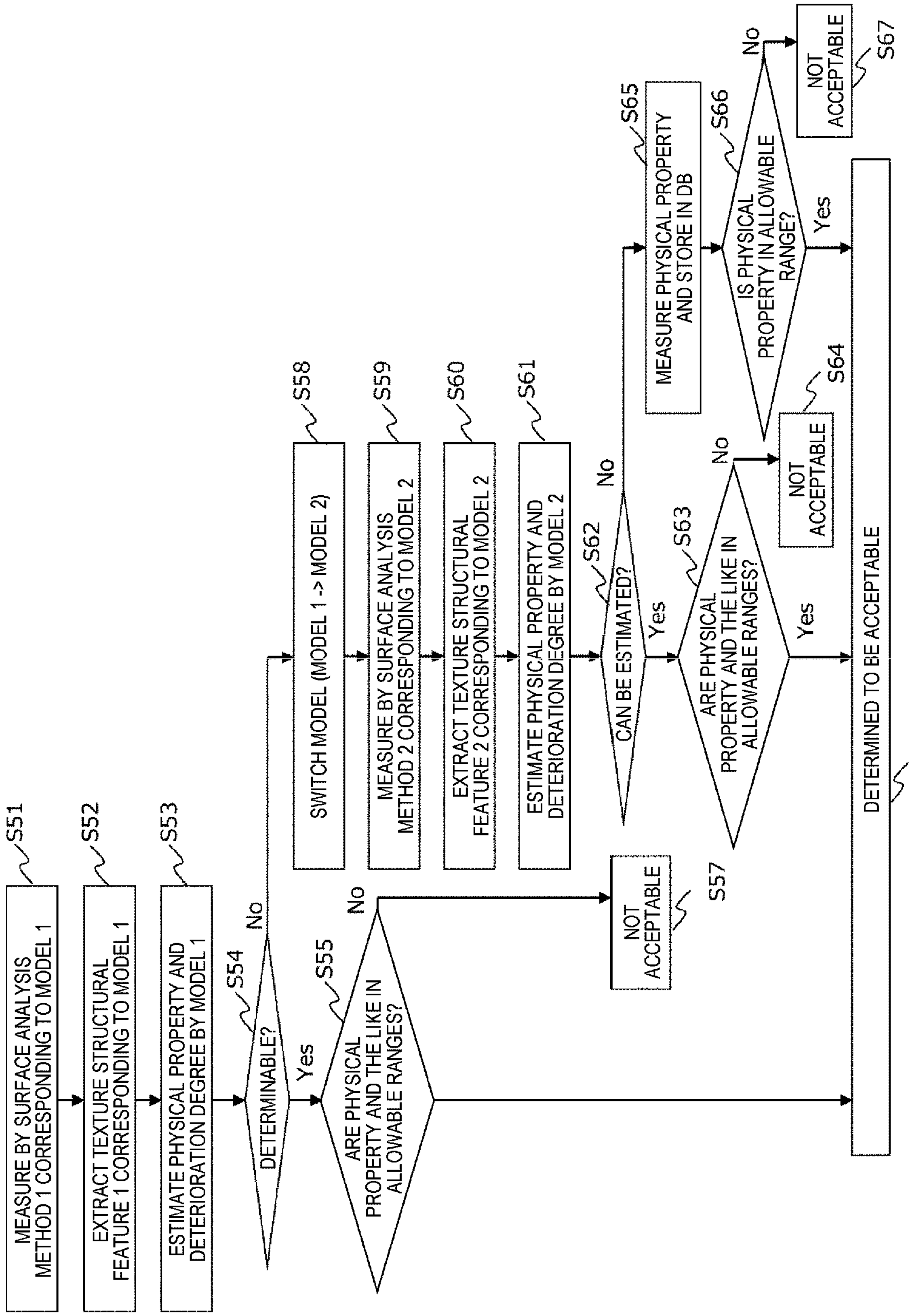
MEASURE BY SURFACE ANALYSIS METHOD 1 CORRESPONDING TO MODEL 1
S51
EXTRACT TEXTURE STRUCTURAL FEATURE 1 CORRESPONDING TO MODEL 1
S52
ESTIMATE PHYSICAL PROPERTY AND DETERIORATION DEGREE BY MODEL 1
S53
DETERMINABLE?
S54
Yes
No
ARE PHYSICAL PROPERTY AND THE LIKE IN ALLOWABLE RANGES?
S55
Yes
No
NOT ACCEPTABLE
S57
SWITCH MODEL (MODEL 1 -> MODEL 2)
S58
MEASURE BY SURFACE ANALYSIS METHOD 2 CORRESPONDING TO MODEL 2
S59
EXTRACT TEXTURE STRUCTURAL FEATURE 2 CORRESPONDING TO MODEL 2
S60
ESTIMATE PHYSICAL PROPERTY AND DETERIORATION DEGREE BY MODEL 2
S61
CAN BE ESTIMATED?
S62
Yes
No
ARE PHYSICAL PROPERTY AND THE LIKE IN ALLOWABLE RANGES?
S63
Yes
No
NOT ACCEPTABLE
S64
MEASURE PHYSICAL PROPERTY AND STORE IN DB
S65
IS PHYSICAL PROPERTY IN ALLOWABLE RANGE?
S66
Yes
No
NOT ACCEPTABLE
S67
DETERMINED TO BE ACCEPTABLE
S56

[FIG. 10B]

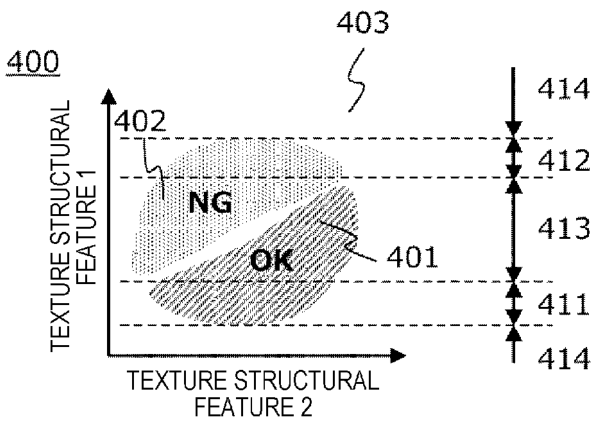
400
403
402
NG
OK
401
TEXTURE STRUCTURAL FEATURE 1
TEXTURE STRUCTURAL FEATURE 2
414
412
413
411
414

[FIG. 11]

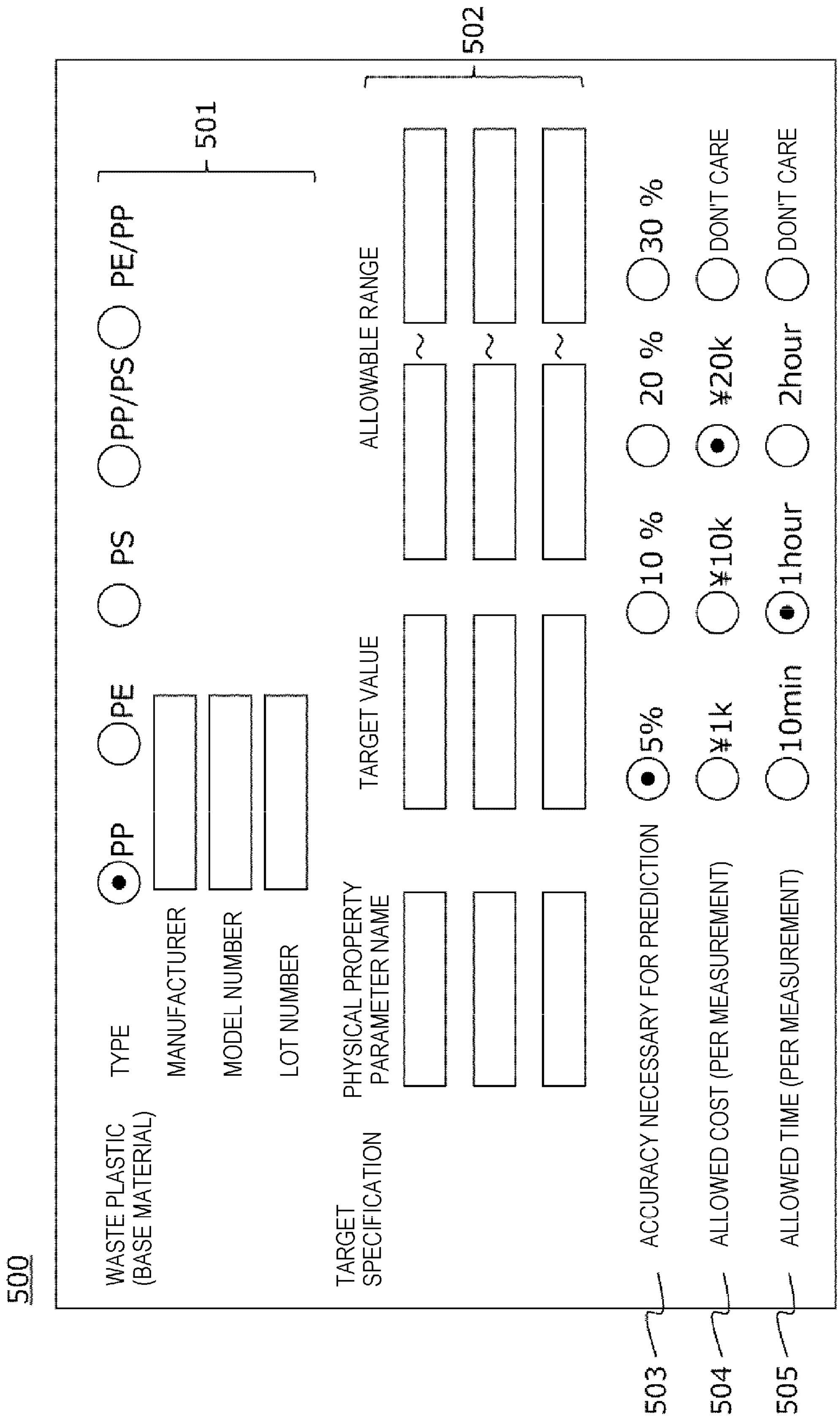
500
501
502
503
504
505
WASTE PLASTIC (BASE MATERIAL)
TYPE
PP
PE
PS
PP/PS
PE/PP
MANUFACTURER
MODEL NUMBER
LOT NUMBER
TARGET SPECIFICATION
PHYSICAL PROPERTY PARAMETER NAME
TARGET VALUE
ALLOWABLE RANGE
~
ACCURACY NECESSARY FOR PREDICTION
5%
10 %
20 %
30 %
ALLOWED COST (PER MEASUREMENT)
¥1k
¥10k
¥20k
DON'T CARE
ALLOWED TIME (PER MEASUREMENT)
10min
1hour
2hour
DON'T CARE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002308998 A


### Non-patent literature cited in the description


- *Compounding process is used. optimization for recycled materials using machine learning algorithms*, ISSN ISSN 2212-8271, 237-242